# EUROPEAN PATENT APPLICATION

(11) **EP 4 586 160 A1**
(43) Date of publication of application: **16.07.2025**
(21) Application number: 22961824.4
(22) Date of filing: 14.10.2022
(51) Int. Cl.: G06Q 10/06, G06Q 10/08

(54) **ROBOT DELIVERY METHOD AND SYSTEM, ROBOT, TERMINAL DEVICE, SERVER, AND STORAGE MEDIUM**

(71) Applicant: SZ Shanzhi Technology Co., Ltd., Shenzhen, Guangdong 518000 (CN)
(72) Inventor: JIANG, Songyan, Shenzhen, Guangdong 518000 (CN)
(74) Representative: Goddar, Heinz J.
(86) International application number: PCT/CN2022/125530
(87) International publication number: WO 2024/077638

(57) **Abstract**

A robot delivery method and system, a robot, a terminal device, a server, and a storage medium. The robot delivery system includes a terminal device, a server, and a delivery robot. The terminal device is used to determine delivery demand information, where the delivery demand information includes a target collection mode and/or a target unloading mode input by a user. The server is used to receive the delivery demand information from the terminal device and generate a delivery task data packet according to the delivery demand information. The delivery robot is used to receive the delivery task data packet from the server, and perform the delivery task according to the delivery task data packet. Users' cargo collection/unloading needs in different scenarios can be satisfied.

## Description

### TECHNICAL FIELD

The present disclosure generally relates to the field of logistics delivery technologies, and, more particularly, to a robot delivery method and system, a robot, a terminal device, a server, and a storage medium.

### BACKGROUND

Delivery robots are new products in the era of smart logistics. Their research and development aim to solve the "last mile" delivery problem and alleviate the prominent contradictions in the development of conventional human delivery methods at this stage. Compared with human delivery, delivery robots can work continuously, and the delivery cost is expected to be lower than that of human delivery.

To make delivery robots more widely used, how to make them more flexible and intelligent to suit various delivery needs or delivery scenarios is an urgent problem to be solved.

### SUMMARY

Based on this, the embodiments of the present disclosure provide a robot delivery method and system, a robot, a terminal device, a server, and a storage medium.

In a first aspect, the present disclosure provides a robot delivery system including terminal device(s), a server, and delivery robot(s).

The terminal device(s) are used to determine delivery demand information, wherein the delivery demand information includes a target collection mode and/or a target unloading mode input by a user.

The server is used to receive the delivery demand information from the terminal device(s) and generate a delivery task data packet according to the delivery demand information.

The delivery robot(s) are used to receive the delivery task data packet from the server, and perform the delivery task according to the delivery task data packet.

The target collection mode is selected from a plurality of collection modes. The plurality of collection modes include a first collection mode in which the delivery robot(s) collect cargos at a collection point without the user's participation and a second collection mode in which the user participates in the collection by the delivery robot of the cargos at the collection point. The target unloading mode is selected from a plurality of unloading modes; and the plurality of unloading modes include a first unloading mode in which the delivery robot unloads the cargos at the unloading point without the user's participation and a second unloading mode in which the user participates in the unloading by the delivery robot of the cargos at the unloading point.

In a second aspect, the present disclosure provides a robot delivery method. The method includes:
receiving delivery demand information input by a user, wherein the delivery demand information includes a target collection mode and/or a target unloading mode; and
generating a delivery task data packet according to the delivery demand information, such that a delivery robot receives the delivery task data packet and performs the delivery task according to the delivery task data packet.

The target collection mode is selected from a plurality of collection modes. The plurality of collection modes include a first collection mode in which the delivery robot(s) collect cargos at a collection point without the user's participation and a second collection mode in which the user participates in the collection by the delivery robot of the cargos at the collection point. The target unloading mode is selected from a plurality of unloading modes; and the plurality of unloading modes include a first unloading mode in which the delivery robot unloads the cargos at the unloading point without the user's participation and a second unloading mode in which the user participates in the unloading by the delivery robot of the cargos at the unloading point.

In a third aspect, the present disclosure provides a robot delivery method. The method includes:
receiving a delivery task data packet, wherein the delivery task data packet is generated according to delivery demand information input by a user and the delivery demand information includes a target collection mode and/or a target unloading mode; and
performing a corresponding delivery task according to the delivery task data packet.

The target collection mode is selected from a plurality of collection modes. The plurality of collection modes include a first collection mode in which the delivery robot(s) collect cargos at a collection point without the user's participation and a second collection mode in which the user participates in the collection by the delivery robot of the cargos at the collection point. The target unloading mode is selected from a plurality of unloading modes; and the plurality of unloading modes include a first unloading mode in which the delivery robot unloads the cargos at the unloading point without the user's participation and a second unloading mode in which the user participates in the unloading by the delivery robot of the cargos at the unloading point.

In a fourth aspect, the present disclosure provides a robot delivery method. The method includes:
receiving delivery demand information input by a user, wherein the delivery demand information includes a target collection mode and/or a target unloading mode; and
sending the delivery demand information to a server, such that the server generates a delivery task data packet according to the delivery demand information to cause a delivery robot to receive the delivery task data packet from the server and perform the delivery task according to the delivery task data packet.

The target collection mode is selected from a plurality of collection modes. The plurality of collection modes include a first collection mode in which the delivery robot(s) collect cargos at a collection point without the user's participation and a second collection mode in which the user participates in the collection by the delivery robot of the cargos at the collection point. The target unloading mode is selected from a plurality of unloading modes; and the plurality of unloading modes include a first unloading mode in which the delivery robot unloads the cargos at the unloading point without the user's participation and a second unloading mode in which the user participates in the unloading by the delivery robot of the cargos at the unloading point.

In a fifth aspect, the present disclosure provides a robot delivery method. The method includes:
receiving a delivery task packet issued by a server, wherein: the delivery task data packet includes position information of multiple path points, and the multiple path points include a collection point, an unloading point, and multiple intermediate path points between the collection point and the unloading point; and
processing the path points according to temporary processing strategies corresponding to unreachable path points when it is detected that at least one of the multiple path points is unreachable, wherein the temporary processing strategies corresponding to at least some of different categories of path points are different.

In a sixth aspect, the present disclosure provides a server. The server includes: a memory configured to store executable instructions; and one or more processors.

When the one or more processors execute the executable instructions, the one or more processors are independently or collectively configured to implement a method provided by the second aspect of the present disclosure.

In a seventh aspect, the present disclosure provides a delivery robot. The robot includes: a memory configured to store executable instructions; one or more processors; a travel mechanism and multiple storage compartments.

When the one or more processors execute the executable instructions, the one or more processors are independently or collectively configured to implement a method provided by the third aspect or the fifth aspect of the present disclosure.

In an eighth aspect, the present disclosure provides a terminal device. The device includes: a memory configured to store executable instructions; and one or more processors.

When the one or more processors execute the executable instructions, the one or more processors are independently or collectively configured to implement a method provided by the fourth aspect of the present disclosure.

In a nineth aspect, the present disclosure provides a computer-readable storage medium. The computer-readable storage medium stores executable instructions. The executable instructions, when executed by processor(s), implement a method provided by the second aspect, the third aspect, the fourth aspect or the fifth aspect of the present disclosure.

In the various embodiments of the present disclosure, the delivery robot is more flexible and intelligent and can be applied to various delivery needs or delivery scenarios. The embodiments and beneficial effects will be further elaborated later.

### BRIEF DESCRIPTION OF THE DRAWINGS

To more clearly illustrate the technical solutions of the embodiments of the present disclosure, the drawings needed for use in the description of the embodiments will be briefly introduced below. Obviously, the drawings described below are some embodiments of the present disclosure. For those ordinary in the art, other drawings can be obtained based on these drawings without any creative work.
FIG. 1 is a schematic structural diagram of a robot delivery system consistent with embodiments of the present disclosure.
FIG. 2A is a schematic diagram showing a sender information filling page consistent with embodiments of the present disclosure.
FIG. 2B is a schematic diagram showing a recipient information filling page consistent with embodiments of the present disclosure.
FIG. 2C is a schematic diagram showing a delivery demand information filling page consistent with embodiments of the present disclosure.
FIG. 2D is a schematic diagram showing a chat interface showing a cargo delivery control and a delivery demand information filling page consistent with embodiments of the present disclosure.
FIG. 3 is a schematic structural diagram of a storage mechanism installed on a delivery robot consistent with embodiments of the present disclosure.
FIG. 4A is a schematic diagram showing a temporary processing strategy corresponding to intermediate path points of the access control category consistent with embodiments of the present disclosure.
FIG. 4B is a schematic diagram showing a temporary processing strategy corresponding to intermediate path points of the gate category consistent with embodiments of the present disclosure.
FIG. 4C is a schematic diagram showing a temporary processing strategy corresponding to intermediate path points of the parking lot category consistent with embodiments of the present disclosure.
FIG. 4D is a schematic diagram showing a temporary processing strategy corresponding to unloading points of the manned unloading category consistent with embodiments of the present disclosure.
FIG. 5 shows a schematic diagram showing path points that two delivery robots are about to reach and are occupied by each other, respectively, consistent with embodiments of the present disclosure.
FIG. 6A is a schematic structural diagram of a delivery robot consistent with embodiments of the present disclosure.
FIG. 6B is a schematic structural diagram of a first cover member consistent with embodiments of the present disclosure.
FIG. 6C is a schematic structural diagram of a second cover member consistent with embodiments of the present disclosure.
FIG. 7A is a schematic diagram showing a storage compartment selection page consistent with embodiments of the present disclosure.
FIG. 7B is a schematic diagram showing a delivery page consistent with embodiments of the present disclosure.

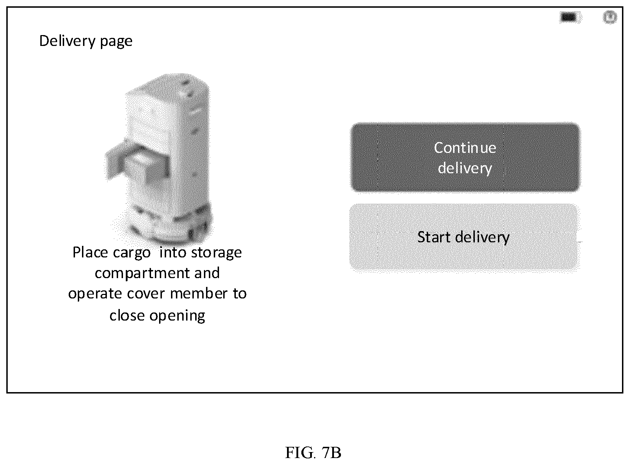

FIG. 7B is a schematic diagram showing a prompt page consistent with embodiments of the present disclosure.

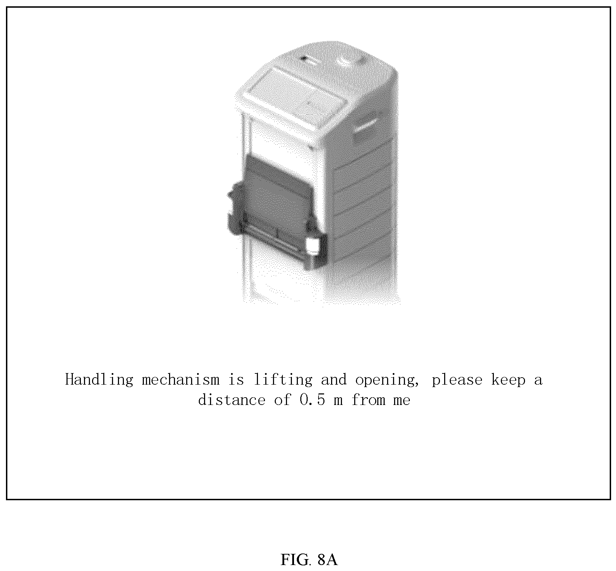

FIG. 8A is a schematic diagram showing another prompt page consistent with embodiments of the present disclosure.

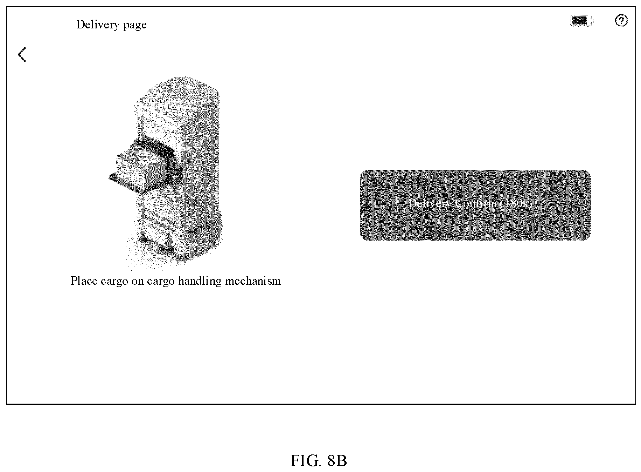

FIG. 8B is a schematic diagram showing another delivery page consistent with embodiments of the present disclosure.

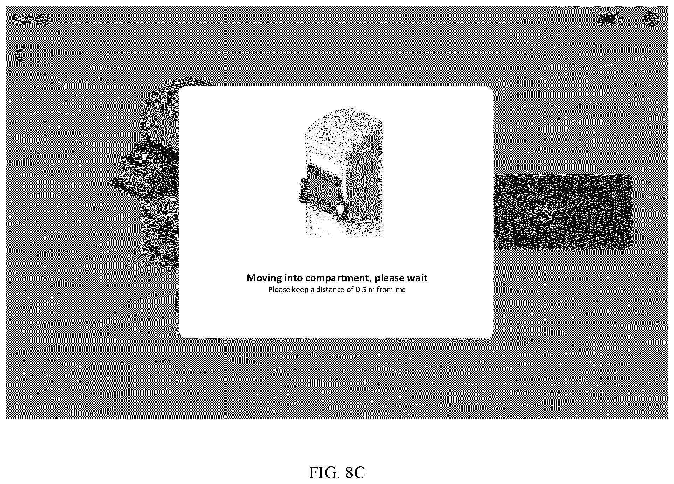

FIG. 8C is a schematic diagram showing another prompt page consistent with embodiments of the present disclosure.

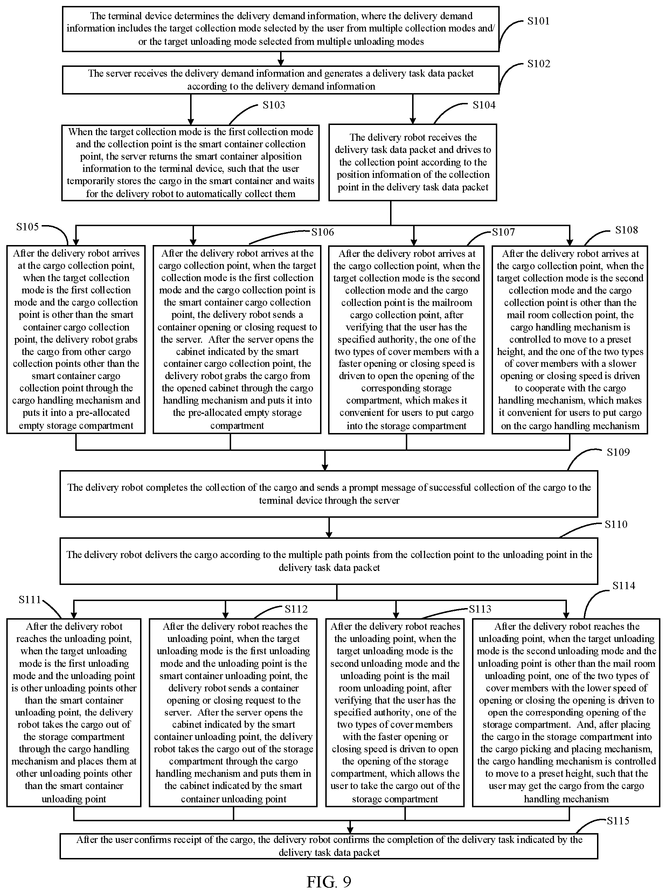

FIG. 9 is a flowchart of a robot delivery method consistent with embodiments of the present disclosure.

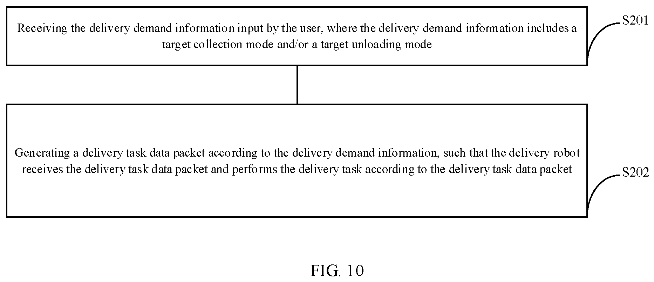

FIG. 10 is a flowchart of another robot delivery method consistent with embodiments of the present disclosure.

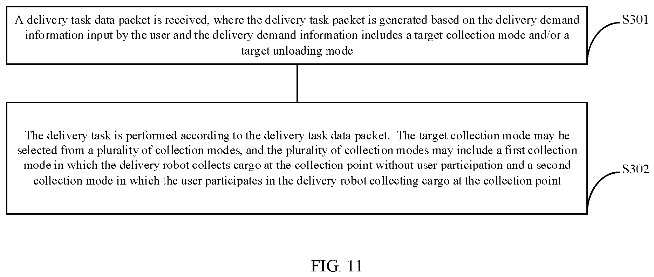

FIG. 11 is a flowchart of another robot delivery method consistent with embodiments of the present disclosure.

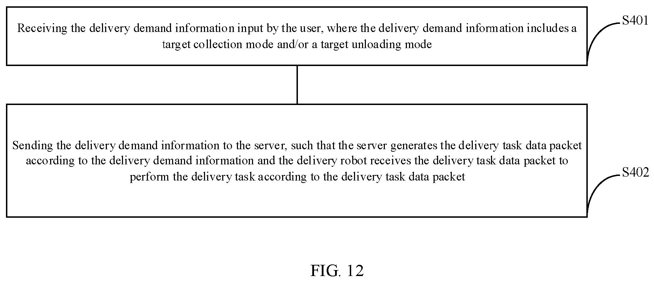

FIG. 12 is a flowchart of another robot delivery method consistent with embodiments of the present disclosure.

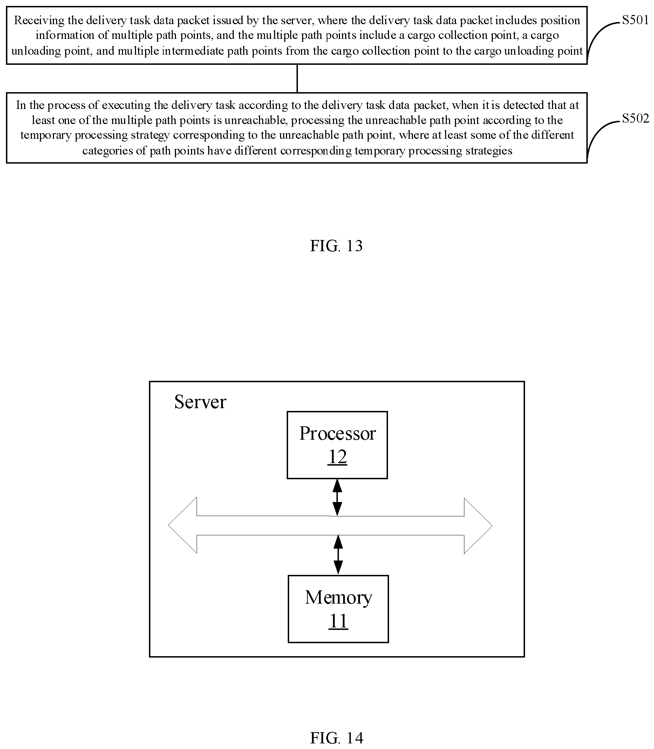

FIG. 13 is a flowchart of another robot delivery method consistent with embodiments of the present disclosure.
FIG. 14 is a schematic structural diagram of a server consistent with the present disclosure.

### DETAILED DESCRIPTION OF THE EMBODIMENTS

The technical solution in the embodiments of the present disclosure will be clearly and completely described below in conjunction with the drawings in the embodiments of the present disclosure. Obviously, the described embodiments are part of the embodiments of the present application, not all of the embodiments. Based on the embodiments in the present disclosure, all other embodiments obtained by those skilled in the art without creative work are within the scope and protection of the present disclosure.

The robot delivery method in the related art usually requires the user to participate in the process of collecting cargos and unloading cargos, which makes it difficult to meet the different delivery needs of users. In response to the problems in the existing technologies, the present disclosure provides a robot delivery system. The robot delivery system may include terminal device(s), a server and delivery robot(s). The robot delivery system may be able to provide a variety of collection modes and a variety of unloading modes for users to choose from, which meets the user's needs for cargo collection/delivery/unloading in different scenarios, is more convenient for users to use, and is conducive to improving the user experience.

The robot delivery system provided in the embodiment of the present disclosure is described below as example.

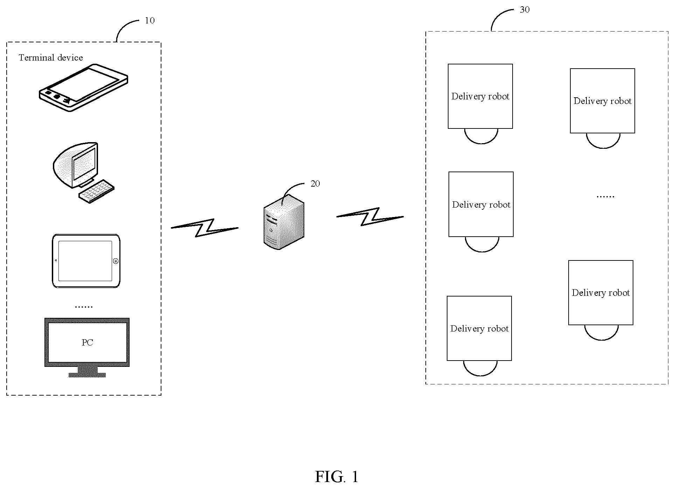

As shown in FIG. 1, one embodiment of the present disclosure provides a robot delivery system. The robot delivery system includes terminal device(s) 10, a server 20 and delivery robot(s) 30. It can be understood that the robot delivery system may include multiple terminal devices 10 and multiple delivery robots 30.

It is understandable that the embodiment of the present disclosure does not impose any restrictions on the form of the terminal device(s) 10, and the terminal device(s) 10 may include but are not limited to smart phones/mobile phones, tablet computers, personal digital assistants (PDAs), laptop computers, desktop computers, wearable devices (e.g., watches, glasses, gloves, headwear, pendants, armbands, leg rings, shoes, vests), remote controls, or any other type of device. The terminal device(s) 10 may have the function of communicating with the server 20. The server 20 may be a backend server, a server cluster, or a cloud server. One delivery robot 30 may at least include storage compartments and a power mechanism. The storage compartments may be used to store cargos, and the delivery robot(s) 30 may be able to move forward, backward, or make turns through the power mechanism.

For example, the delivery robot(s) 30 may be able to pass through a preset unmanned delivery region to perform delivery tasks in the unmanned delivery region, and the unmanned delivery region may include but is not limited to office parks, residential communities, industrial parks, schools, exhibition halls, museums, or shopping malls, etc. For example, in some embodiments, the multiple delivery robots 30 included in the robot delivery system may be dispatched by the server 20 to perform delivery tasks in the preset unmanned delivery region.

Taking an office park as an example, the delivery robot(s) 30 may perform delivery tasks indoors or outdoors in the office park, and the collection points and unloading points of the delivery tasks may be any location in the office park. In one example, the delivery task may be performed in a same office building, such as performing the delivery task on the same floor or across floors of the same office building. For example, after one delivery robot 30 collects cargos on the 3rd floor, it may deliver the cargos to the 10th floor. In another example, the delivery robot 30 may perform delivery tasks between different office buildings. For example, after collecting the cargos in the office building A, the delivery robot 30 may deliver the cargos to the office building B. In another example, the delivery robot 30 may perform delivery tasks in the parking lot or other outdoor venues in the office park. For example, after collecting the cargos in the express delivery room in the office park, the delivery robot 30 may deliver the cargos to the parking lot or a designated road in the office park.

For example, the cargos that need to be delivered in the preset unmanned delivery region may be the cargos produced in the unmanned delivery region. Taking the office park as an example, the documents and materials printed by users in the office park may need to be delivered by the delivery robot(s) 30 between different floors or different office buildings. Alternatively, the cargos that need to be delivered in the preset unmanned delivery region may also be cargos from outside the unmanned delivery region. Taking the office park as an example, the courier may place the cargos from outside the office park in the mailroom of the office park, and then the delivery robot 30 may collect the cargos from the mailroom and deliver the cargo to any location in the office park specified by the user.

The unmanned delivery system may support multiple collection modes and multiple unloading modes. The multiple collection modes may include a first collection mode in which the delivery robot 30 collects cargos at the collection point without user participation and a second collection mode in which the user participates in the collection by the delivery robot 30 of cargos at the collection point. The multiple unloading modes may include a first unloading mode in which the delivery robot 30 unloads cargos at the unloading point without user participation and a second unloading mode in which the user participates in the unloading by the delivery robot 30 of cargos at the unloading point.

The terminal device(s) 10 may be used to determine the delivery demand information, and the delivery demand information may include a target collection mode and/or a target unloading mode input by the user. The target collection mode may be selected by the user from the multiple collection modes, and the target unloading mode may be selected by the user from the multiple unloading modes.

The server 20 may be used to receive the delivery demand information from the terminal device(s) 10 and generate a delivery task data packet according to the delivery demand information.

One delivery robot 30 may be used to receive one corresponding delivery task data packet from the server 20 and perform the corresponding delivery task according to the delivery task data packet.

In this embodiment, the user may more conveniently select the target collection mode and/or the target unloading mode in the terminal device(s) 10 based on his or her actual needs. The delivery robot(s) 30 may complete the collection of cargos according to the target collection mode selected by the user and/or complete the delivery of cargos according to the target unloading mode selected by the user. The collection/unloading of cargo may be achieved with or without the participation of the user. The multiple collection modes and the multiple unloading modes may meet the user's needs for collection/unloading in different scenarios, and may be more convenient for users to use, which is conducive to improving the user experience. And the collection/unloading without the participation of the user may further save the user's waiting time.

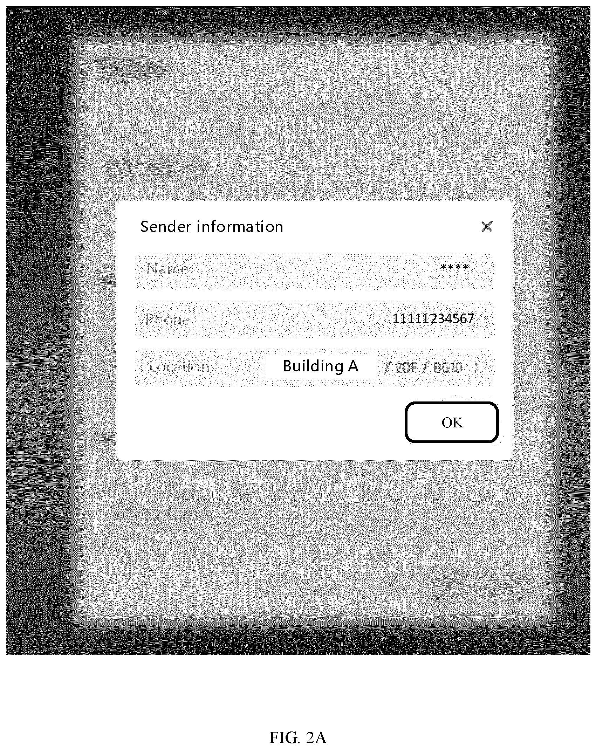

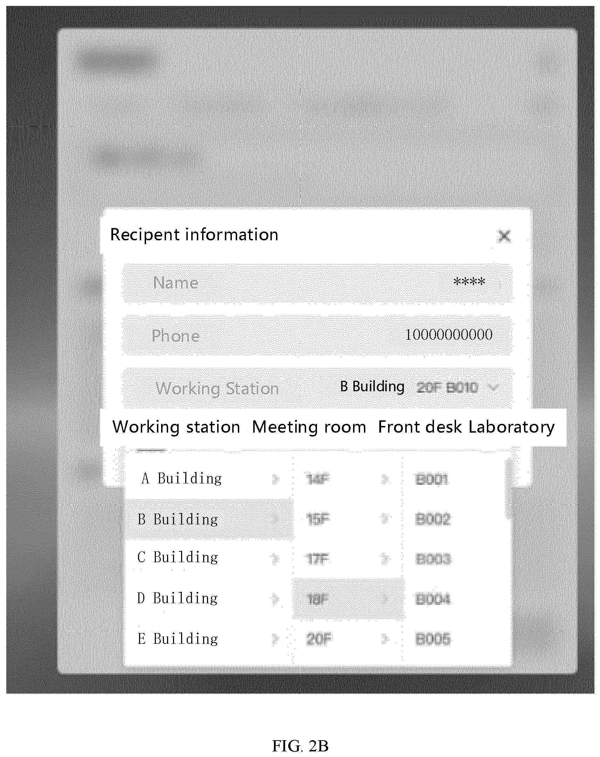

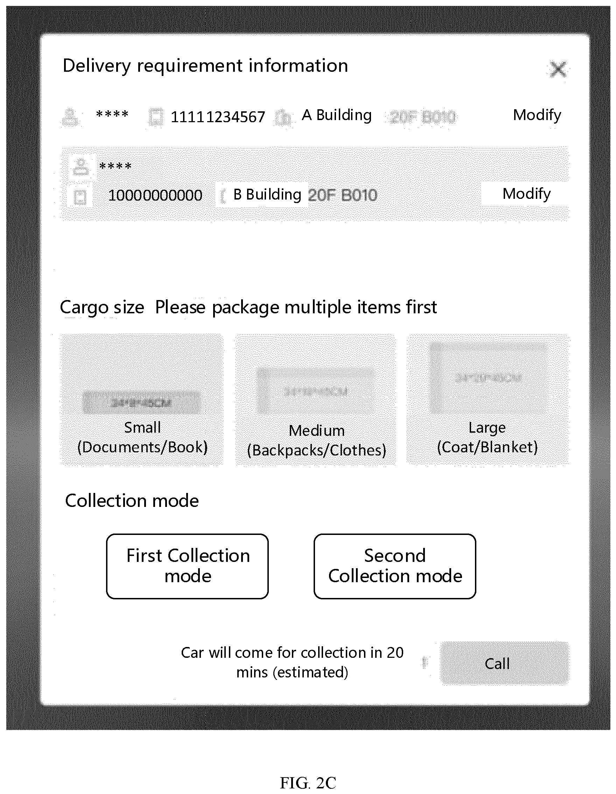

In some embodiments, the user may input the delivery demand information in one terminal device 10 according to his actual needs. For example, the delivery demand information may include at least one of cargo size information, the target collection mode, the target unloading mode, position information of the collection point, position information of the unloading point, sender contact information, or recipient contact information. In one example shown in FIG. 2A, FIG. 2B, and FIG. 2C, FIG. 2A shows a sender information filling page in the terminal device 10 for the user to fill in the sender name, sender contact information, and position information of the collection point; FIG. 2B shows a recipient information filling page in the terminal device 10 for the user to fill in the recipient name, contact information, and unloading point; and FIG. 2C shows a delivery demand information filling page in the terminal device 10 for the user to select the cargo size and the collection mode.

In a possible implementation, considering that it is cumbersome for the user to manually fill in all the contents of the delivery demand information, to reduce the number of steps for the user to fill in, the terminal device 10 may automatically match the associated information according to the information input by the user to automatically fill in part of the information in the delivery demand information. That is, the delivery demand information may include the information input by the user and the information automatically matched by the information input by the user, thereby facilitating the user's filling efficiency.

For example, the terminal device 10 may pre-store user data related to the user. The terminal device 10 may be also used to receive part of the user information input by the user in the process of receiving the delivery demand information input by the user, and obtain the remaining user information associated with the part of the user information from the pre-stored user data according to the part of the user information, to automatically fill in the remaining user information in the delivery demand information, thereby facilitating the user's filling efficiency.

In one example, for example, when the user fills in the sender information on the page shown in FIG. 2A, after the user enters the sender name, the terminal device 10 may obtain the sender contact information associated with the sender name and the position information of the collection point from the pre-stored user data according to the sender name, and automatically fill in the information, thereby reducing the user's filling operation and improving the filling efficiency.

In another example, for example, when a user fills in the recipient information on the page shown in FIG. 2B, after the user enters the recipient name, the terminal device 10 may obtain the recipient contact information associated with the recipient name and the position information of the unloading point from the pre-stored user data according to the recipient name, and automatically fill in the information, thereby reducing the user's filling operation and improving the filling efficiency. Of course, as shown in FIG. 2C, in the case where the user has not confirmed, the user may be supported to modify at least one of the sender information and the recipient information at any time.

After the user completes the input and confirms that it is correct, the call control in the terminal device 10 (such as the "Call Now" control in FIG. 2C) may be triggered, and the terminal device 10 may send the delivery demand information entered by the user to the server 20 in response to the call control being triggered.

For example, the terminal device 10 may run a cargo delivery client, which may be an independent application (APP), or one of the functions in an application (such as a mini program), or a web client. Through the cargo delivery client, the terminal device 10 may send the delivery demand information input by the user to the server 20.

Taking the cargo delivery client as one of the functions in the chat application as an example, during the operation of the chat application, the terminal device 10 may display a chat interface, which includes a cargo delivery control. Any one terminal device 10 may be also used to pop up a delivery demand information filling page in response to the user's operation on the cargo delivery control, and automatically fill in the user information of the chat object corresponding to the chat interface in the delivery demand information filling page. In this embodiment, the automatic filling of part of the information in the delivery demand information may be realized, which is conducive to improving the user's filling efficiency.

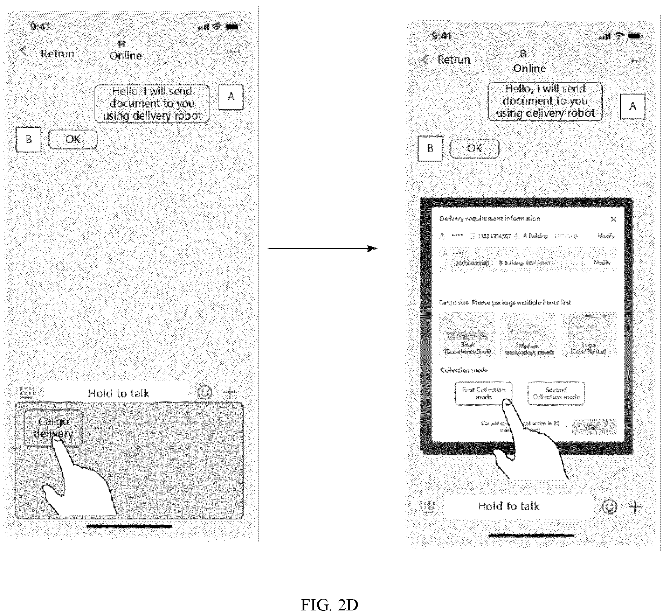

In one example, as shown in the chat interface shown in FIG. 2D, object A wants to send cargo to user B in the same unmanned delivery region through the delivery robot 30. At this time, user A may operate the cargo delivery control in the chat interface, and the terminal device 10 may pop up the delivery demand information filling page, and automatically fill in the sender information of user A (such as name, contact information and/or collection point, etc.) and the recipient information of user B (such as name, contact information and/or unloading point, etc.) in the delivery demand information filling page. User A may further input the cargo size information and the target collection mode. After the user input is completed and confirmed, the terminal device 10 may send the delivery demand information to the server 20.

When selecting the target collection mode, the user may choose from the first collection mode in which the user does not need to participate in the collection of cargo of the delivery robot 30 at the collection point and the second collection mode in which the user participates in the collection of cargo at the collection point according to his actual needs.

Among them, the collection point in the first collection mode may include the smart container collection point or other collection points other than the smart container collection point. For the smart container collection point, the user may place the cargo in the smart container, and the delivery robot may collect the cargo from the smart container. For example, the delivery robot may communicate with the smart container and open the container compartment door corresponding to the smart container collection point. After the cargos are collected from the container compartment by the delivery robot's pickup mechanism, the delivery robot may further communicate with the smart container to close the compartment door. Further, the user may also place the cargo at one collection point other than the smart container collection point (such as on the ground, on the table, or on the shelf), and the delivery robot may collect the cargo from the collection point through the pickup mechanism. In some embodiments, the user may flexibly select the collection point in the first pickup mode when placing an order, and the delivery robot 30 may automatically pick up the cargo at the smart container collection point or other collection points other than the smart container collection point without user participation.

The collection points in the second collection mode may include mailroom collection points or other collection points other than the mailroom collection point. The mailroom collection points may be understood as the cargo collection concentration point in the unmanned delivery region, that is, the delivery robot(s) 30 may collect multiple cargo from one mailroom at one time. There may be one or more mailroom collection points. Other collection points may be any places in the unmanned delivery region other than the mailroom collection points. For example, the cargo that the delivery robot(s) 30 need to collect at the mailroom collection points may be cargo received from outside the unmanned delivery region. Taking the office park as an example, after the courier delivers the cargo outside the office park to the mailroom of the office park, the staff of the mailroom may arrange the delivery process of the cargo in the office park with the help of the robot delivery system provided by the present disclosure. The target collection mode selected by the staff of the mailroom may be the second collection mode and the collection point may be the mailroom collection point. The delivery robot 30 may go to the mailroom collection point to collect the cargo and deliver the cargo to the recipient of the cargo in the unmanned delivery region. Of course, the cargo that the delivery robot(s) 30 need to collect at the collection point in the mailroom may also be the cargo received from the unmanned delivery region, and this embodiment does not impose any restrictions on this.

Similarly, when selecting the target unloading mode, the user may choose arbitrarily from the first unloading mode in which the user does not need to participate in unloading the cargo of the delivery robot 30 at the unloading point and the second unloading mode in which the user participates in unloading the cargo at the unloading point by the delivery robot 30 according to actual needs. Among them, the unloading point in the first unloading mode may include a smart container unloading point or other unloading points other than the smart container unloading point. The unloading point may be selected by the user according to actual needs. For the smart container unloading point, the delivery robot may unload the cargo to the corresponding smart container. For example, the delivery robot may communicate with the smart container and open the container compartment door corresponding to the smart container unloading point, unload the cargo into the smart container through the unloading mechanism of the delivery robot, and further communicate with the smart container to close the compartment door. In some embodiments, the user may flexibly select the unloading point in the first unloading mode when placing an order, and the delivery robot 30 may automatically unload the cargo at the smart container unloading point or other unloading points other than the smart container unloading point without user participation.

The unloading point in the second unloading mode may include the mailroom unloading points or other unloading points other than the mailroom unloading points. The mailroom unloading point may be understood as the unloading concentration point in the unmanned delivery region, that is, the delivery robot(s) 30 may deliver multiple cargo to the mailrooms at one time. There may be one or more mailroom unloading points, and other unloading points may be any place in the unmanned delivery region other than the mailroom unloading points. For example, the cargo delivered to the mailroom by the delivery robot(s) 30 may be cargo that needs to be sent outside the unmanned delivery region (locations that the delivery robot(s) 30 cannot reach). Taking the office park as an example, the user may deliver the cargo to the mailroom by the delivery robot 30, and then the staff of the mailroom may be responsible for negotiating with the relevant logistics platform to realize the delivery of the cargo outside the unmanned delivery region. Of course, the cargo delivered to the mailroom by the delivery robot 30 may also be cargo sent to the staff in the mailroom, and do not need to be sent outside the unmanned delivery region. This embodiment does not impose any restrictions on this.

In some embodiments, the cargo collection mechanism and the cargo unloading mechanism may be the same mechanism, such as a cargo handling mechanism.

It is understood that when there is only a target collection mode but no target unloading mode in the distribution demand information, the unmanned distribution system may contact the recipient according to the recipient's contact information in the distribution demand information to determine the target unloading mode. When there is only a target unloading mode but no target collection mode in the distribution demand information, the unmanned distribution system may contact the sender according to the sender's contact information in the distribution demand information to determine the target collection mode.

In some embodiments, the server 20 may receive the distribution demand information from the terminal device 10 and generate the distribution task data packet according to the distribution demand information. It is understood that the robot distribution system may include multiple terminal devices 10 and multiple distribution robots 30. Any terminal device 10 may submit one or more distribution demand information to the server 20. The server 20 may receive multiple distribution demand information from multiple terminal devices 10, and generate a corresponding distribution task data packet for each distribution demand information. And then the server 20 may implement the scheduling of the multiple distribution tasks in the multiple distribution robots 30.

For each of the multiple delivery demand information, the server 20 may determine a target delivery robot from the multiple delivery robots 30 to send the delivery task data packet corresponding to the delivery demand information to the target delivery robot. For example, the server 20 may determine the target delivery robot from the multiple delivery robots 30 according to the delivery demand information, and the target delivery robot may receive the delivery task data packet from the server 20 to perform the delivery task, complete the collection of cargo according to the target collection mode, and/or complete the delivery of cargo according to the target unloading mode.

In an exemplary embodiment, considering that the second collection mode and the second unloading mode are delivery modes that require user participation, to reduce the waiting time of the user, the delivery priority corresponding to the second collection mode may be set higher than the delivery priority of the first collection mode, and the delivery priority of the second unloading mode may be set higher than the delivery priority of the first unloading mode. In the process of determining the target delivery robot, the server 20 may determine the delivery priority according to the target collection mode and/or the target unloading mode in the delivery demand information; and determine the target delivery robot from the multiple delivery robots 30 according to the delivery priority.

In one example, the order of determining the target delivery robot may be determined according to the delivery priority of different delivery tasks. When the delivery priority of one delivery task is higher, the server 20 may preferentially determine the target delivery robot that matches the delivery task. In another example, for example, when the delivery priority is higher, the target delivery robot determined from the multiple delivery robots 30 may be closer to the collection point or the unloading point. In another example, for example, the determined target delivery robot may have no other delivery tasks to be performed, or the delivery priorities of other delivery tasks that the determined target delivery robot needs to perform may be all lower than the delivery priority of the delivery task to be scheduled this time, such that the target delivery robot may preferentially perform the delivery task with a high delivery priority. In this embodiment, the target delivery robot may be selected based on the delivery priority, such that the delivery tasks with the target collection mode of the second collection mode and/or the target unloading mode of the second unloading mode may be executed first, thereby helping to reduce the user's waiting time.

In another exemplary embodiment, the delivery robot(s) 30 may include a plurality of storage compartments for accommodating cargo. The delivery demand information may also include cargo size information. In the process of determining the target delivery robot, the server 20 may determine the target delivery robot from the plurality of delivery robots 30 according to the cargo size information, and the target delivery robot may have a storage compartment matching the cargo size information.

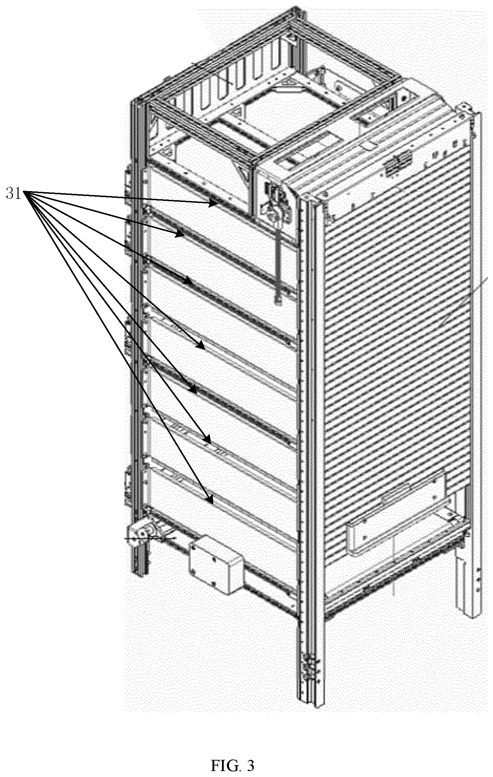

To achieve effective utilization of the storage compartments, the volume of any of the storage compartments may be adjusted. For example, as shown in FIG. 3, which shows a storage mechanism that may be set on the delivery robot 30, the storage mechanism may include a plurality of storage compartments, and different storage compartments may be separated by detachable partitions 31. The volume of any storage compartment may be adjusted by the disassembly of the partition 31. The size of the storage compartment may be flexibly adjusted by disassembling or installing the partitions 31 between the storage compartments, such as by disassembling the partitions 31 between the storage compartments to combine at least two storage compartments into one storage compartment, or by installing the partitions 31 between the storage compartments to divide a storage compartment into at least two smaller storage compartments, so as to be suitable for cargo of different sizes, thereby meeting the delivery needs of cargo of different sizes.

For example, at least one of the width and height of one storage compartment may be able to be adjusted by one detachable partition 31. For example, as shown in FIG. 3, the width of the storage compartment is fixed, and the height is able to be adjusted by one detachable partition 31, and adjacent partitions form a storage compartment. Of course, it is not excluded that the storage compartment may be set in a fixed volume manner, and this embodiment does not impose any restrictions on this.

In an exemplary embodiment, in the process of determining the target delivery robot, the server 20 may determine the target delivery robot from the multiple delivery robots 30 according to the delivery demand information and the status information of each delivery robot 30 in the multiple delivery robots 30. The delivery demand information may include cargo size information, position information of the collection point and/or the unloading point. The status information of one delivery robot 30 may include the volume of the empty storage compartments in the delivery robot 30, the position information of the delivery robot 30, or the position information of the collection point and/or the unloading point of other delivery tasks that the delivery robot 30 needs to perform.

The server 20 may select the target delivery robot by comprehensively considering at least one of the following information: the matching degree between the cargo size information in the delivery demand information and the volume of the empty storage compartments, the distance between the collection point in the delivery demand information and the position information of the delivery robot 30, or the distance difference between the collection point/unloading point in the delivery demand information and the collection point and/or the unloading point of other delivery tasks that the delivery robot 30 needs to perform (which may be understood as the degree of convenience, that is, when the distance difference is smaller, it may be more convenient). In one example, the server 20 may determine as the target delivery robot one delivery robot 30 that has an empty storage compartment that matches the cargo size information and whose current position is closest to the collection point in the delivery demand information. In another example, the server 20 may determine as the target delivery robot one delivery robot 30 that satisfies the following three conditions at the same time: an empty storage compartment that matches the cargo size information, the current position of the delivery robot 30 is relatively close to the collection point in the delivery demand information (e.g., less than a preset threshold), and the distance difference between the collection point/unloading point in the delivery demand information and the collection point and/or delivery location of other delivery tasks that the delivery robot 30 needs to perform is small (e.g., a preset difference).

After determining the target delivery robot that matches one certain delivery demand information, the server 20 may send the delivery task data packet corresponding to the delivery demand information to the target delivery robot, such that the target delivery robot is able to perform the delivery task according to the delivery task data packet, such as completing the collection of cargo according to the target collection mode in the delivery task data packet and/or completing the delivery of cargo according to the target unloading mode. In some embodiments, in the process of generating the delivery task data packet according to the certain delivery demand information, the server 20 may perform path planning according to the position information of the collection point and the position information of the unloading point included in the delivery demand information, and obtain the position information of multiple path points from the collection point to the unloading point. The multiple path points may include the collection point, the unloading point, and multiple intermediate path points from the collection point to the unloading point. Then one delivery robot 30 (i.e., the above-mentioned target delivery robot) responsible for the delivery task corresponding to the delivery task data packet may perform the delivery task according to the multiple path points. After successfully collecting cargo at the collection point, the delivery robot 30 may drive to the unloading point according to the multiple path points to achieve the delivery of cargo.

In addition, when the server 20 sends the delivery task to the delivery robot 30, the delivery robot 30 may not be at the collection point and needs to go from the current position to the collection point to collect the cargo. In this case, the server 20 may also perform path planning based on the current position of the delivery robot 30 and the position information of the collection point to obtain the position information of the path points from the current position of the delivery robot 30 to the collection point; that is, the multiple path points included in the delivery data packet may include the collection point, the unloading point, multiple intermediate path points between the current position of the robot and the collection point, and multiple intermediate path points from the collection point to the unloading point.

The delivery robot 30 may have the function of autonomous route planning and may be able to autonomously plan the driving route between any two adjacent path points among the multiple path points. Therefore, the server 20 may generate relevant path points in specific physical scenes and/or scenes where the delivery robot 30 needs to perform tasks based on the physical scenes that the delivery robot 30 needs to pass through from the current position to the collection point and/or from the collection point to the unloading point in the unmanned delivery region. There may be no need to generate path points for locations where tasks do not need to be performed. The delivery robot 30 may perform autonomous planning based on two adjacent path points and travel from one of the two adjacent path points to the other path point according to the autonomously planned route. In this embodiment, the server 20 may only need to generate relevant path points in specific physical scenes and/or scenes where the delivery robot 30 needs to perform tasks. There may be no need to generate a large number of path points, which is beneficial to improving the path planning efficiency of the server 20.

It is understandable that the server 20 may have the authority to manage the access equipment in the unmanned delivery region and may be able to control the opening and closing of the access equipment. The access equipment may include but is not limited to elevators, access control or gates, etc.

In one example, taking the unmanned delivery region of an office park as an example, the physical scene may include but is not limited to elevator scenes, access control scenes, gate scenes, or parking lot scenes, etc. The tasks that the delivery robot 30 needs to perform may include but are not limited to: (1) sending an elevator opening request to the server 20 in the elevator scene to achieve taking the elevator; (2) sending a pass request to the server 20 in the access control scene to achieve passing the access control; (3) sending a pass request to the server 20 in the gate scene to achieve passing the gate; (4) in the parking lot scene, it is necessary to perform a turning task at the corner of the road; (5) it is necessary to perform a cargo collection task at the collection point; (6) it is necessary to complete the cargo delivery task at the unloading point, etc. For example, the server 20 may pre-store a semantic map of the unmanned delivery region, which reflects the physical meaning of each scene in the unmanned delivery region, such as elevators, gates, access control, roads, parking lots, workstations or corridors. The server 20 may generate the position information of multiple path points from the current position of the delivery robot 30 to the delivery point, and from the delivery point to the unloading point according to the position information of the delivery demand information, the current position of the delivery robot 30 and the semantic map. The voice map may be constructed by using the data collected by laser radars and imaging devices, and then semantically annotated.

The multiple path points may be divided into different categories according to the physical scenes of the location of path points and/or the task to be performed when reaching the path points. For example, different categories of path points may include at least one of the following but are not limited to: an intermediate path point of the elevator category, an intermediate path point of the access control category, an intermediate path point of the gate category, an intermediate path point of the parking lot category, a collection point of the manned cargo collection category, a collection point of the unmanned cargo collection category, an unloading point of the manned cargo unloading category, or an unloading point of the unmanned cargo unloading category. Among them, the collection point of the manned cargo collection category may be the collection point in the second cargo collection mode, and the unloading point of the manned cargo unloading category may be the unloading point in the second unloading mode. The unloading point of the unmanned cargo unloading category may be the unloading point in the first unloading mode.

In some embodiments, considering that at least one path point may be occupied by other objects or pedestrians when the delivery robot 30 performs the delivery task according to the multiple path points in the delivery task, the delivery task may fail to execute. Therefore, to ensure the execution success rate of the delivery task, in one embodiment of the present disclosure, a temporary processing strategy may be set for different categories of path points in the multiple path points, and at least some of the different categories of path points may have different corresponding temporary processing strategies. When the delivery robot 30 is performing a delivery task according to the multiple path points in the corresponding delivery task data packet, when it is detected that at least one of the multiple path points is unreachable, the delivery robot 30 may proceed according to the temporary processing strategy corresponding to the unreachable path point, thereby ensuring that the delivery task is carried out smoothly.

For example, the temporary processing strategies corresponding to different categories of path points may be pre-stored in the delivery robot 30; or, the delivery task data packet may carry the temporary processing strategies corresponding to different categories of path points.

For example, the temporary processing strategies corresponding to different categories of path points may include at least one of the following but are not limited to: (1) The temporary processing strategies corresponding to the intermediate path points of the elevator category and the intermediate path points of the access control category including: waiting for the elevator or access control to open in a preset region including the intermediate path point; (2) The temporary processing strategies corresponding to the intermediate path points of the gate category including: waiting for the gate of the gate to open at a spare path point close to the gate; (3) The temporary processing strategies corresponding to the intermediate path points of the parking lot category including: passing through a preset passage region including the intermediate path point; and when the preset passage region is occupied, waiting at the original location; (4) The temporary processing strategies corresponding to the collection points of the manned cargo collection category and the unloading points of the manned cargo unloading category including: stopping in a preset region around the collection point or the unloading point to reduce the obstruction of the delivery robot 30 to normal passage; (5) The temporary processing strategies corresponding to the unloading points of the unmanned cargo unloading category including: placing the cargo at a spare unloading point near the unloading point. In this embodiment, temporary processing strategies corresponding to different categories of path points may be set such that the delivery robot 30 may be able to process according to the temporary processing strategies when the path points are occupied, which is beneficial to improving the success rate of the delivery robot 30 in performing delivery tasks.

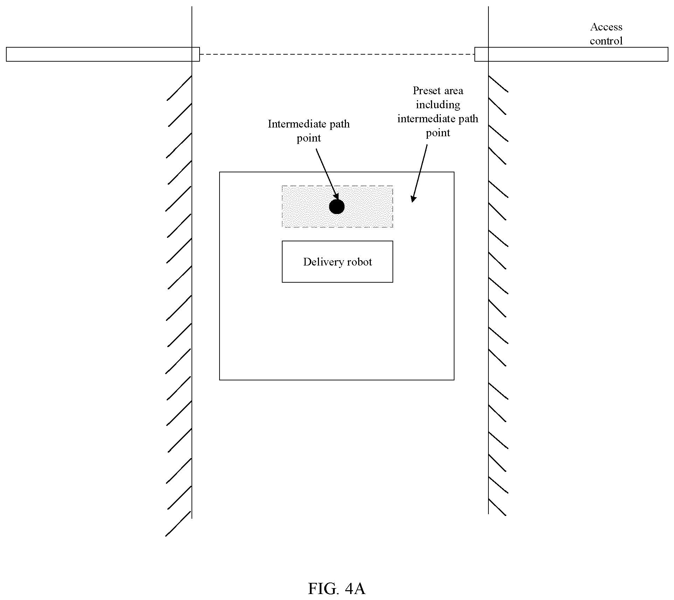

In one example, the temporary processing strategies corresponding to the intermediate path points of the elevator category and the intermediate path points of the access control category are described as example. As shown in the access control scene shown in FIG. 4A, where the black dot is the intermediate path point that the delivery robot 30 needs to reach this time, after reaching the intermediate path point, the delivery robot 30 needs to send a pass permission request to the server 20 to pass the access control. When the intermediate path point is occupied, the delivery robot 30 may autonomously select the optimal position in the preset region including the intermediate path point, for example, the optimal position may be the position behind the intermediate path point. The delivery robot 30 may send the pass permission request to the server 20 after stopping at the optimal position, and pass the access control after the server 20 opens the access control. The area of the preset region may be determined according to the area occupied by the delivery robot 30 and the preset safety area. The safety area may be used to prevent the delivery robot 30 from colliding with obstacles (such as walls, decorations in the aisle such as potted plants, etc.) to protect the physical space. For example, the area of the preset region may be the sum of N times the area occupied by the delivery robot 30 and the preset safety area, where N is an integer greater than 0 and the value of N may be determined according to the actual situation of the access control.

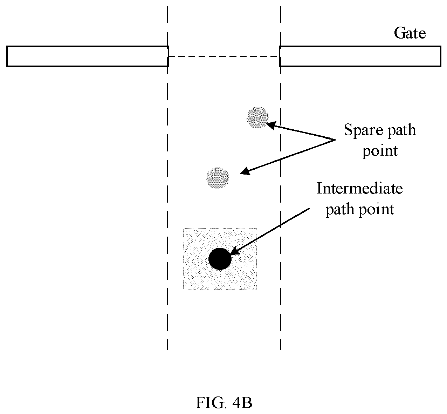

In another example, the temporary processing strategy corresponding to the intermediate path point of the gate category is exemplified. As shown in the gate scene shown in FIG. 4B, where the black dot is the intermediate path point that the delivery robot 30 needs to reach this time, after reaching the intermediate path point, the delivery robot 30 needs to send a pass permission request to the server 20 to pass through the gate. When the intermediate path point is occupied, to prevent illegal persons without pass permission from following the delivery robot 30 through the gate, the delivery robot 30 may stop at a spare path point close to the gate. For example, the spare path point may be a position closer to the gate in front of the occupied intermediate path point, such that the gate is able to be quickly closed after the delivery robot 30 passes, avoiding the situation of illegal persons following. The delivery robot 30 may send a pass permission request to the server 20 at the spare path point and pass through the gate after the server 20 opens the gate.

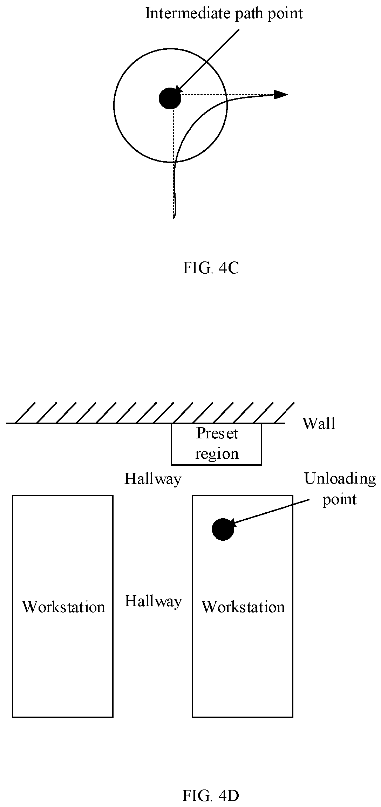

In another example, the temporary processing strategy corresponding to the intermediate path point of the parking lot category is exemplified. As shown in FIG. 4C, in the parking lot, to ensure the safety of the delivery robot 30, the delivery robot 30 may pass through the preset passage region between the parking space and the driving lane, since passing through other locations outside the preset passage region may have the risk of collision with vehicles. The black point is the intermediate path point where the delivery robot 30 needs to perform the turning task this time. When the intermediate path point is occupied, the delivery robot 30 may perform the turning task in the preset passage region including the intermediate path point. When the preset passage region is occupied, to ensure the safety of the delivery robot 30, the delivery robot 30 may be made to wait in place until the preset passage region is passable.

In another example, the temporary processing strategy corresponding to the unloading point of the manned unloading category is exemplified. As shown in FIG. 4D, the black point is the unloading point where the delivery robot 30 needs to unload this time. When the recipient is not waiting to receive the cargo at the unloading point, the delivery robot 30 may stop in the preset region around the unloading point, such as at the edge near the wall, and wait for the recipient in a parking manner that does not hinder the normal passage of people.

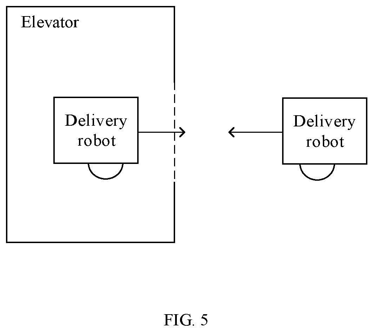

In some embodiments, one of the special cases where the path points are occupied is that the path points that the two robots are about to reach are occupied by each other. In this case, when the two robots proceed according to the temporary processing strategy corresponding to the unreachable path points, there may be a conflict between the two, resulting in the failure of the delivery task. For example, as shown in FIG. 5, in the elevator scene, there are two delivery robots 30 performing delivery tasks respectively, one of which is to leave the elevator, and the other is to enter the elevator. The path points that the two are about to reach are occupied by each other. When the temporary processing strategies corresponding to the path points that the two robots are about to reach are both stopping in place until the path points are reachable, there may be a conflict between the two, resulting in the failure of the delivery tasks. Therefore, in view of the situation that the path points that the two robots are about to reach are occupied by each other, this embodiment implements arbitration by the server 20 to coordinate the passage of the two robots.

In a possible implementation, any delivery robot 30 may be also used to send the occupation information of the path point to the server 20 when it is detected that the path point that the delivery robot 30 is about to reach is occupied by other delivery robot(s) 30 during the process of performing the delivery task according to the multiple path points. The server 20 may be also used to receive the occupation information of the path points from different delivery robots 30; and, when it is determined according to at least two occupation information that the path points that the two delivery robots 30 are about to reach are occupied by each other, the passage of the two delivery robots 30 may be coordinated. In this embodiment, when the mutual occupation situation occurs, the delivery robot(s) 30 may request the server 20 to arbitrate, thereby improving the success rate of the delivery tasks.

In another possible implementation, to facilitate the server 20 to manage the multiple delivery robots 30, any of the delivery robots 30 may be also used to report its own position information to the server 20 in real time during the execution of the delivery task. The server 20 may determine, based on the received position information of each delivery robot 30 and the multiple path points in the delivery task performed by each delivery robot 30, that the path points to be reached by two delivery robots 30 are occupied by each other; and coordinate the passage of the two delivery robots 30. In this embodiment, the server 20 may predict the mutual occupation situation and coordinate the upcoming mutual occupation situation in advance, thereby improving the execution success rate of the delivery tasks.

For example, in the process of coordinating the passage of the two delivery robots 30, the server 20 may determine the passage coordination strategy of the two delivery robots 30 according to the number of delivery robots 30 that are able to be accommodated in the region corresponding to the occupied path point, to control the passage of the two delivery robots 30 according to the passage coordination strategy. As an example, the passage coordination strategy may include the driving order of the two delivery robots 30 when driving to the occupied path point and/or the path point where any of the two delivery robots 30 temporarily stops, to ensure that the two delivery robots 30 are able to pass smoothly and improve the success rate of the delivery tasks.

In one example, when the region corresponding to the occupied path point is an elevator region as an example, the server 20 may determine the passage coordination strategy of the two delivery robots 30 according to the difference between the upper limit of the number of the delivery robots 30 that are able to be accommodated by the elevator and the actual number of delivery robots 30 currently accommodated. For example, when the actual number of delivery robots 30 currently accommodated in the elevator reaches the upper limit of the delivery robots 30 that the elevator is able to accommodate, the passage coordination strategy determined by the server 20 may be to first allow the delivery robot(s) 30 in the elevator to drive out of the elevator and stop at a temporary path point, and then allow the delivery robot(s) 30 outside the elevator to enter the elevator.

In one example, when the region corresponding to the occupied path point is an access control region as an example, the server 20 may determine the passage coordination strategy of the two delivery robots 30 according to the number of delivery robots 30 that are able to be allowed to pass after the access control is opened. When the number of the delivery robots 30 that are allowed to pass after the access control is opened is 1, the passage coordination strategy determined by the server 20 may be first making one of the two delivery robots 30 stop at a temporary path point and wait for the other delivery robot 30 to pass through the access control first, and then allowing the delivery robot 30 to pass through the access control. If the number of delivery robots 30 that are allowed to pass after the access control is opened is larger than 2, the passage coordination strategy determined by the server 20 may be to allow the two delivery robots 30 to pass in parallel.

In one example, when the region corresponding to the occupied path point is a parking lot region, the server 20 may determine the passage coordination strategy of the two delivery robots 30 according to the number of delivery robots 30 allowed to pass through the preset passage region including the path point. When the number of delivery robots 30 allowed to pass through the preset passage region is 1, the passage coordination strategy determined by the server 20 may be to first allow one of the two delivery robots 30 to stop at the temporary path point and wait for the other delivery robot 30 to pass before allowing the delivery robot 30 to pass.

In some embodiments, when one delivery robot 30 performs the delivery task according to the delivery task data packet, after arriving at the collection point, the cargo may be collected according to the target collection mode in the delivery task data packet. And, after arriving at the unloading point, the cargo may be delivered according to the target unloading mode in the delivery task data packet.

In one possible embodiment, one delivery robot 30 may include a cargo handling mechanism (such as a mechanical arm or a mechanical shovel) and a plurality of storage compartments. When the cargo is collected in the first collection mode, the delivery robot 30 may use the cargo handling mechanism to grab the cargo from the collection point (smart container collection points or other collection points other than the smart container collection points) and put it into a pre-allocated empty storage compartment, thereby realizing cargo collection without user participation and getting rid of the dependence on the presence of people. When the cargos are delivered in the first unloading mode, the delivery robot 30 may use the cargo handling mechanism to take the cargo from the storage compartment accommodating the cargos and place them at the unloading point (smart container unloading points or other unloading points other than the smart container unloading points), to realize the cargo delivery without user participation and get rid of the dependence on the presence of people.

For the smart container collection point or the smart container unloading point, the delivery robot 30 may send a container opening or closing request to the server 20. The server 20 may have the management authority of the smart container and may be able to realize the opening and closing control of the smart container according to the container opening or closing request, such that the delivery robot 30 is able to collect cargo from the smart container or place the cargo in the smart container.

For example, to ensure the safety of the cargo collection process, the delivery robot 30 may be provided with a camera, and the delivery robot 30 may be also used to turn on the camera to record after arriving at the collection point when collecting cargo in the first collection mode until the cargos are collected; or, when unloading in the first unloading mode, the camera may be turned on to record after arriving at the unloading point until the cargos are unloaded.

For example, to ensure safety during the cargo collection process, the delivery robot 30 may also include a scanning module (including but not limited to a camera, a laser radar or an infrared sensor, etc.).

When the cargo is collected in the first collection mode, after the delivery robot 30 arrives at the collection point, it may use the scanning module to perform cargo detection at the collection point. After the detection is passed, the cargo handling mechanism may be used to grab the cargo from the collection point (the smart container collection point or other collection points other than the smart container collection point) and put it into a pre-allocated empty storage compartment. Then the delivery robot 30 may upload the collected image at the collection point to the server 20 for backup, and report to the server 20 that the cargo collection is completed after confirming that the cargo is placed in the storage compartment for the second time. The server 20 may send a delivery status notification message to the terminal device 10. After completing the cargo collection, the delivery robot 30 may drive to the unloading point according to the multiple path points in the delivery task data packet for cargo delivery. During the driving process, the delivery robot 30 may send its own position information and images collected along the way to the server 20 at a preset frequency. The server 20 may send the position information and the above-mentioned images of the delivery robot 30 to the terminal device 10, such that the user is able to learn about the delivery status of the cargo through the terminal device 10.

When the cargo is delivered in the first unloading mode, the delivery robot 30 may detect the placement of the cargo through the scanning module after arriving at the unloading point. After the detection is passed, the delivery robot 30 may use the cargo handling mechanism to take the cargo from the storage compartment accommodating the cargo and place it at the unloading point (smart container unloading point or other unloading points other than smart container unloading point). Then the delivery robot 30 may perform a second scan and identification of the unloading point through the scanning module. After confirming that the cargo is placed at the unloading point, the image at the unloading point may be collected and uploaded to the server 20 for backup, and the server 20 may be notified that the unloading is completed. Then the server 20 may send a notification message to the recipient's terminal device 10 showing that the cargo is delivered to the unloading point.

In another possible implementation, when the cargo is collected in the second collection mode or delivered in the second unloading mode, user participation may be required. During the collection or unloading process, the delivery robot 30 may need to interact with the user for confirmation, and complete the collection or unloading if the confirmation is correct.

In some embodiments, the collection point in the second collection mode may include the mailroom collection point or other collection points other than the mailroom collection point, and the unloading point in the second unloading mode may include the mailroom unloading point or other unloading points other than the mailroom unloading point. As mentioned above, the mailroom collection point may be the collection center point, and the delivery robot 30 may need to collect multiple cargo at the mailroom collection point at one time; and the mailroom unloading point may be the unloading concentration point, and the delivery robot 30 may need to deliver multiple cargo to the mailroom unloading point at one time. That is to say, the mailroom may have high requirements for the efficiency of the delivery robot 30 in the cargo collection process and the unloading process. Therefore, in one embodiment of the present disclosure, any delivery robot 30 may include multiple storage compartments for accommodating cargo, and any storage compartment may include two openings and two types of cover members for opening or closing the two openings, respectively. The two types of cover members may have different speeds for opening or closing the corresponding openings.

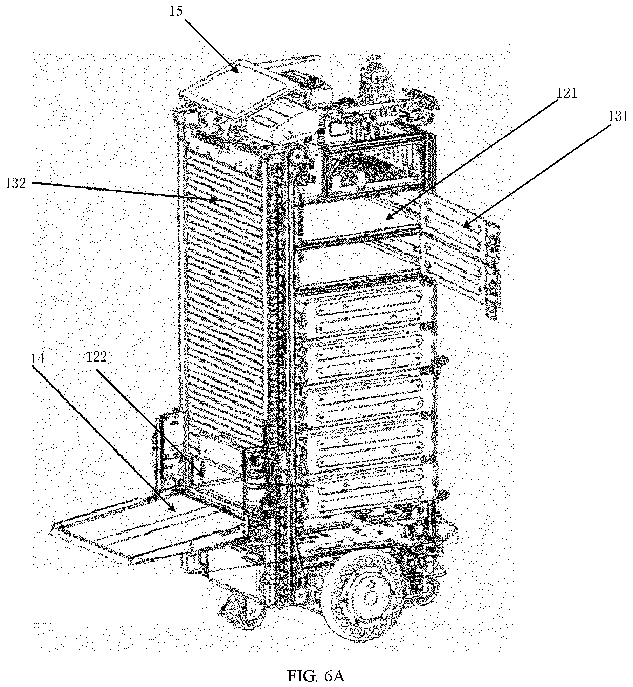

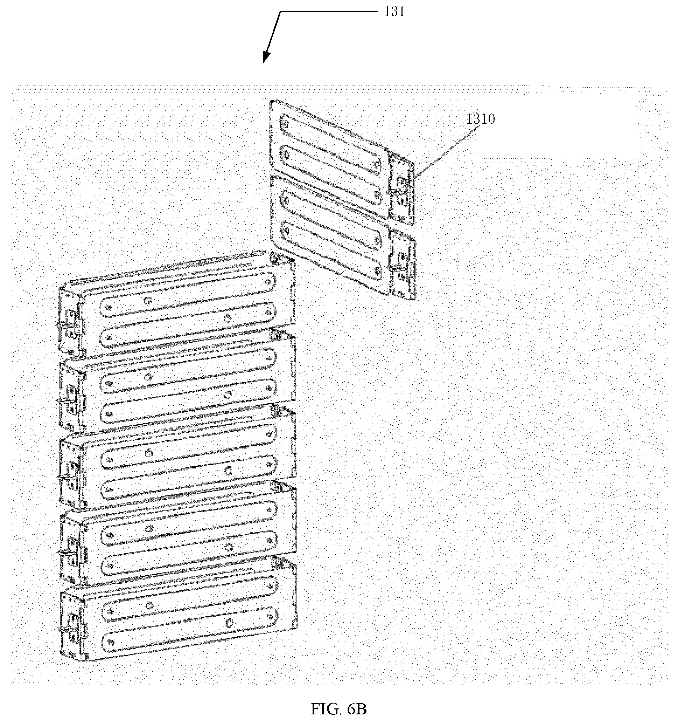

For example, FIG. 6A shows two openings of one storage compartment (named as the first opening 121 and the second opening 122 for easy distinction) and two types of cover members used to open or close the two openings (named as the first-type cover member 131 and the second-type cover member 132 for easy distinction). For example, the cover member of the two types that opens or closes the opening faster (i.e., the first type of cover member 131) may be opened by the electric lock mechanism. FIG. 6B shows the first-type cover member 131 and the door lock hook 1310 of the electric lock mechanism. The first-type cover member 131 may rotate around the fixed bracket, thereby realizing the action of opening and closing the first opening. It is understandable that, since the volume of the storage compartment may be changed accordingly based on the change in the number and/or position of the detachable partitions, the first opening 121 of one storage compartment may correspond to at least one first-type cover member 131. For example, the first opening of one small storage compartment may correspond to one first-type cover member 131, the first opening of one medium storage compartment may correspond to two first-type cover members 131, and the first opening of one large storage compartment may correspond to three first-type cover members 131.

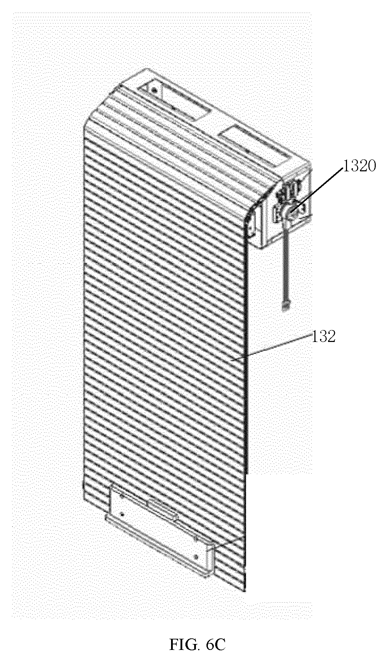

As shown in FIG. 6C, one cover member with a lower speed of opening or closing the opening (i.e., the second cover member 132) of the two types of cover members may be opened by a transmission mechanism 1320. As shown in FIG. 6A, the two openings may be respectively located on different sides of the storage compartment.

For example, the delivery robot 30 may be also used to drive the cover member with a faster speed of opening or closing the opening (i.e., the first-type cover member 131) of the two types of cover members in the second collection mode when the collection point is the mailroom collection point and it is checked that the user has the specified authority, to realize the rapid opening of the first opening 121 and facilitate the user to put the cargo into the storage compartment. Furthermore, the delivery robot 30 may be also used to drive the one of the two types of cover members that opens or closes the opening faster (i.e., the first-type cover member 131) when the unloading point in the second unloading mode is the mailroom unloading point and it is checked that the user has the specified authority, to quickly open the first opening 121 and facilitate the user to take out the cargo from the storage compartment. This embodiment may improve the efficiency of the process of collecting or unloading cargo through the first-type cover member 131 and the first opening 121, such that the delivery robot 30 may perform the delivery operation efficiently.

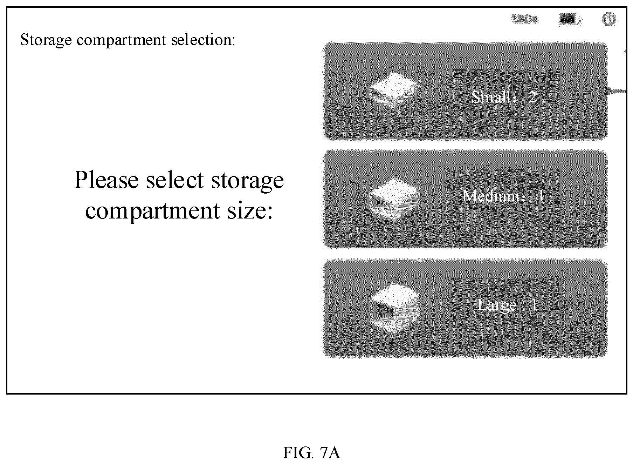

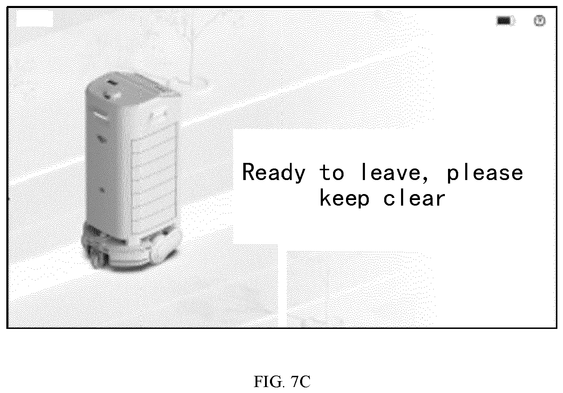

For example, after the delivery robot 30 arrives at the mailroom collection point, the storage compartment selection page as shown in FIG. 7A may be displayed on the display screen of the delivery robot 30 or on the terminal device 10, such that the user is able to select the corresponding storage compartment on the storage compartment selection page. For example, when the user selects a small storage compartment, the delivery robot 30 may drive the one of the two types of cover members that opens or closes the opening faster (i.e., the first-type cover member 131) to open the first opening 121 of the small storage compartment, and output the delivery page as shown in FIG. 7B. The delivery page may include delivery prompt information, a continue delivery control, and a start delivery control. The delivery prompt information may be used to prompt the user to put the cargo into the storage compartment and operate the cover member to close the opening. After the user completes putting the cargos in, when the continued delivery control is triggered, the above steps may be repeated, and the user in the mailroom may continue to put the cargo into the vacant storage compartments reopened by the delivery robot 30. After the user completes putting the cargo in, when the start delivery control is triggered, the delivery robot 30 may output the prompt information shown in FIG. 7C for prompting the user to pay attention to avoid, and then the delivery robot 30 may leave the mailroom and start delivering the cargo according to the delivery task data packet.

It is understandable that one cargo may be placed in one storage compartment; or when the recipients of multiple cargoes are the same, the multiple cargoes may also be placed in the same storage compartment, and this embodiment does not impose any restrictions on this.

In some embodiments, as shown in FIG. 6A, any delivery robot 30 may also include a liftable cargo handling mechanism 14, and the cargo handling mechanism 14 may be used to cooperate with the one of the two types of cover members with a lower speed of opening or closing the opening (i.e., the second type of cover member 132). The delivery robot 30 may be also used to control the cargo handling mechanism 14 to move to a preset height after arriving at the cargo pick-up point or the unloading point, when the cargo pick-up point in the second collection mode is not the mailroom cargo pick-up point, the unloading point in the second unloading mode is not the mailroom unloading point, or the user does not have the specified authority; and to drive the one of the two types of cover members with a lower speed of opening or closing the opening (i.e., the second-type cover member 132) to cooperate with the cargo handling mechanism. In this embodiment, cargo pick-up and unloading may be realized through the cargo handling mechanism, which improves the interactivity with the user.

In some embodiments, the cargo handling mechanism 14 and the storage compartment partition may be both provided with conveyor belts. Taking cargo collection as an example, the cargo handling mechanism 14 may move to a preset height, and after the user places the cargo on the cargo handling mechanism 14, the cargo handling mechanism 14 may cooperate with the second-type cover member 132 to move the cargo handling mechanism 14 to a position flush with the storage compartment corresponding to the cargo and form an opening of the storage compartment. The conveyor belt on the partition may cooperate with the conveyor belt on the cargo handling mechanism 14 to move the cargo on the cargo handling mechanism 14 to the storage compartment. The movement of the cargo handling mechanism 14 to a preset height may be conducive to the user's convenient placement of the cargo, without the need for the user to bend down to cooperate with the position of the storage compartment. Taking unloading as an example, the cargo handling mechanism 14 may cooperate with the second-type cover member 132 such that the cargo handling mechanism 14 moves to a position flush with the storage compartment corresponding to the cargo and forms an opening of the storage compartment. The cargo handling mechanism 14 and the storage compartment partition may be both provided with a conveyor belt. The conveyor belt on the partition may cooperate with the conveyor belt on the cargo handling mechanism 14 to move the cargo in the storage compartment to the cargo handling mechanism 14. Further, the cargo handling mechanism 14 may move to a preset height. The movement of the cargo handling mechanism 14 to a preset height may be conducive to the user's convenient collection of the cargo without the user bending over to cooperate with the position of the storage compartment.

For example, the one of the two types of cover members with a lower speed of opening or closing the opening (i.e., the second-type cover member 132) may include an upper curtain and a lower curtain, and the cargo handling mechanism may be linked to the upper and lower curtains. As shown in FIG. 6A and FIG. 6C, FIG. 6C shows the upper curtain and its transmission mechanism. Taking the delivery robot 30 needing to take out the cargo in the top storage compartment as an example, 1) the cargo handling mechanism 14 rises; 2) at the same time, the upper curtain is driven by the transmission mechanism, the upper curtain rises, and a minimum safety distance is maintained between the bottom end of the upper curtain and the cargo handling mechanism 14 (they will not touch each other); 3) the lower curtain is hooked by the cargo handling mechanism 14, and the lower curtain is pulled upward by the cargo handling mechanism 14, which may prevent the cargo in the storage compartment below from being exposed due to the rising of the cargo handling mechanism 14, thereby playing a role in privacy protection. 4) The cargo handling mechanism 14 reaches the top storage compartment, and the cargo handling mechanism 14 and the lower curtain stop moving; 5) The upper curtain continues to move upward until the opening of the top storage compartment changes from closed to fully open, and then the upper curtain stops moving; 6) The conveyor belt of the top storage compartment rotates in coordination with the conveyor belt on the cargo handling mechanism 14, such that the cargo in the top storage compartment moves to the cargo handling mechanism 14; 7) The cargo triggers the infrared sensor on the cargo handling mechanism 14, and the infrared sensor senses that the cargo is completely on the cargo handling mechanism 14; at this time, the cargo is completely placed on the plane of the cargo handling mechanism 14; 8) The transmission mechanism of the upper curtain drives the upper curtain to move downward until the opening of the top storage compartment is completely closed; 9) The cargo handling mechanism 14 moves to a preset height, waiting for someone to take the cargo away, and at the same time, the upper curtain and the lower curtain move downward in linkage, always keeping the cargo in the storage compartment invisible, ensuring the delivery safety of the cargo and playing a role in privacy protection.

It should be noted that, when the target unloading mode is the first unloading mode and the unloading point is other unloading points other than the smart container unloading point, after step 8), the cargo handling mechanism 14 may be lowered to the ground, and the conveyor belt on the partition may cooperate with the conveyor belt on the cargo handling mechanism 14 to put the cargo on the ground.

For example, in the second collection mode, the collection point may be other collection points other than the mailroom collection point. After the delivery robot 30 arrives at the collection point, it may interact with the user for verification. After the verification is successful, the delivery robot 30 may control the cargo handling mechanism to move to a preset height to facilitate the user to release the cargo. Before controlling the liftable cargo handling mechanism to move to the preset height, the delivery robot 30 may output a prompt message as shown in FIG. 8A for prompting the user to keep a distance from the delivery robot. The preset height may be specifically set according to the actual application scenario, and this embodiment does not impose any restrictions. For example, the preset height may be set according to the user's height, which may be 0.7 times the user's height. When the user's height cannot be obtained, it may be set according to the general height of adults. After controlling the liftable cargo handling mechanism to move to the preset height, the delivery robot 30 may output a delivery page as shown in FIG. 8B, where the delivery page includes delivery prompt information and a confirmation delivery control. The delivery prompt information may be used to prompt the user to place the cargo on the cargo handling mechanism. After the user triggers the confirmation delivery control and the delivery robot 30 confirms that the user places the cargo on the cargo handling mechanism, the delivery robot 30 may output a prompt information as shown in FIG. 8C to prompt the user that the cargo is being placed in the storage compartment and to keep a distance from the delivery robot, and then put the cargo into the storage compartment and fold up the cargo handling mechanism.

In one example, the delivery robot 30 may also have a voice interaction module and a printing module, which may automatically print the waybill related to the acquisition, guide the user to perform operations such as cargo packaging and sticking the waybill through the voice interaction module, and guide the user to give the waybill to the scanning module of the delivery robot 30 for scanning the waybill, such that the delivery robot 30 may confirm the cargo information.

For example, in the second unloading mode, the unloading point may be other unloading points other than the mailroom unloading point. After arriving at the collection point, the delivery robot 30 may interact with the user for verification. After successful verification, the delivery robot 30 may take out the target cargo from the storage compartment and place it on the cargo handling mechanism, and then control the cargo handling mechanism to move to a preset height to facilitate the user to pick up the cargo. Among them, before controlling the liftable cargo handling mechanism to move to the preset height, the delivery robot 30 may output a prompt message for prompting the user to keep a distance from the delivery robot. After controlling the liftable cargo handling mechanism to move to the preset height, the delivery robot 30 may output a pickup prompt message to prompt the user to pick up the cargo from the cargo handling mechanism; and after confirming that the user has picked up the cargo from the cargo handling mechanism, the delivery robot 30 may output a prompt message to prompt the user to keep a distance from the delivery robot such that the delivery robot 30 may retract the cargo handling mechanism.

In one example, as shown in FIG. 6A, the delivery robot 30 may include a display screen 15, and the delivery robot 30 may be specifically used to display the pages or information shown in FIG. 7A, FIG. 7B, FIG. 7C, FIG. 8A, FIG. 8B, or FIG. 8C through the display screen 15. In another example, the delivery robot 30 may be specifically used to send the prompt information or the cargo collection information to the terminal device 10 through the server 20 to display the pages or information shown in FIG. 7A, FIG. 7B, FIG. 7C, FIG. 8A, FIG. 8B or FIG. 8C on the terminal device 10.

It may be understood that the present disclosure does not impose any restrictions on the interactive verification method between the delivery robot 30 and the user, and may be specifically set according to the actual application scenario, such as through face recognition, verification code verification or fingerprint recognition, etc.

In some embodiments, the delivery robot 30 may be also used to perform the delivery task again according to the second unloading mode when the first unloading fails for any delivery task in the second unloading mode, such that the user may receive the cargo in the way he expects. In the case of at least two consecutive unloading failures for the same delivery task in the second unloading mode, considering that the preset unmanned delivery region has a certain degree of safety, to improve the delivery efficiency of the delivery robot 30, the delivery task may be performed according to the first unloading mode, that is, the cargo may be placed at the unloading point indicated by the second unloading mode.

For example, when the delivery robot 30 performs one delivery task for the first time in the second unloading mode, when the user does not take away the cargo after arriving at the unloading point for a preset time, it may be determined that the first unloading of the delivery task failed, and other delivery tasks may be performed first. The delivery order of this delivery task may be rearranged. When the delivery task is performed for the second time, it may be still performed according to the second unloading mode, such that the user may receive the cargo in the way he expects. When the user still does not take away the cargo after the delivery robot 30 arrives at the unloading point for a preset time, it may be determined that the delivery task has failed to unload twice in a row. To improve the delivery efficiency and considering that the unmanned delivery region has a certain degree of closure and safety, the delivery robot 30 may perform the delivery task according to the first unloading mode, that is, placing the cargo at the unloading point indicated by the second unloading mode, and then taking pictures and uploading them to the server for backup.

The various technical features in the above embodiments may be combined arbitrarily, as long as there is no conflict or contradiction between the combinations of the features, so the arbitrary combination of the various technical features in the above embodiments also belongs to the scope disclosed in the present disclosure.

In some embodiments, as shown in FIG. 9, the present disclosure also provides a flow chart of a robot delivery method, the method including S101 to S115.

At S101, the terminal device determines the delivery demand information, where the delivery demand information includes the target collection mode selected by the user from multiple collection modes and/or the target unloading mode selected from multiple unloading modes.

At S102, the server receives the delivery demand information and generates a delivery task data packet according to the delivery demand information.

For example, the server may also select a target delivery robot from multiple delivery robots according to the delivery demand information, and the target delivery robot receives the delivery task data packet from the server and performs the delivery task.

At S103, when the target collection mode is the first collection mode and the collection point is the smart container collection point, the server returns the smart container position information to the terminal device, such that the user temporarily stores the cargo in the smart container and waits for the delivery robot to automatically collect them.

At S104, the delivery robot receives the delivery task data packet and drives to the collection point according to the position information of the collection point in the delivery task data packet.

For example, the delivery robot may autonomously plan the route according to the position information of multiple path points carried in the delivery task data packet to achieve passage in the unmanned delivery region.

At S105, after the delivery robot arrives at the collection point, when the target collection mode is the first collection mode and the collection point is other than the smart container collection point, the delivery robot grabs the cargo from other collection points other than the smart container collection point through the cargo handling mechanism and puts it into a pre-allocated empty storage compartment.

At S106, after the delivery robot arrives at the collection point, when the target collection mode is the first collection mode and the collection point is the smart container collection point, the delivery robot sends a container opening or closing request to the server. After the server opens the cabinet indicated by the smart container collection point, the delivery robot grabs the cargo from the opened cabinet through the cargo handling mechanism and puts it into the pre-allocated empty storage compartment.

At S107, after the delivery robot arrives at the collection point, when the target collection mode is the second collection mode and the collection point is the mailroom collection point, after verifying that the user has the specified authority, the one of the two types of cover members with a faster opening or closing speed is driven to open the opening of the corresponding storage compartment, which makes it convenient for users to put cargo into the storage compartment.

At S108, after the delivery robot arrives at the collection point, when the target collection mode is the second collection mode and the collection point is other than the mailroom collection point, the cargo handling mechanism is controlled to move to a preset height, and the one of the two types of cover members with a slower opening or closing speed is driven to cooperate with the cargo handling mechanism, which makes it convenient for users to put cargo on the cargo handling mechanism.

At S109, the delivery robot completes the collection of the cargo and sends a prompt message of successful collection of the cargo to the terminal device through the server.

At S110, the delivery robot delivers the cargo according to the multiple path points from the collection point to the unloading point in the delivery task data packet.

For example, when the delivery robot detects that at least one of the multiple path points is unreachable during the movement, it may process the unreachable path point according to one temporary processing strategy corresponding to the unreachable path point. At least some of the different categories of path points have different temporary processing strategies.

At S111, after the delivery robot reaches the unloading point, when the target unloading mode is the first unloading mode and the unloading point is other unloading points other than the smart container unloading point, the delivery robot takes the cargo out of the storage compartment through the cargo handling mechanism and places them at other unloading points other than the smart container unloading point.

At S112, after the delivery robot reaches the unloading point, when the target unloading mode is the first unloading mode and the unloading point is the smart container unloading point, the delivery robot sends a container opening or closing request to the server. After the server opens the cabinet indicated by the smart container unloading point, the delivery robot takes the cargos out of the storage compartment through the cargo handling mechanism and puts them in the cabinet indicated by the smart container unloading point.

At S113, after the delivery robot reaches the unloading point, when the target unloading mode is the second unloading mode and the unloading point is the mailroom unloading point, after verifying that the user has the specified authority, one of the two types of cover members with the faster opening or closing speed is driven to open the opening of the storage compartment, which allows the user to take the cargo out of the storage compartment.

At S114, after the delivery robot reaches the unloading point, when the target unloading mode is the second unloading mode and the unloading point is other than the mailroom unloading point, one of the two types of cover members with the lower speed of opening or closing the opening is driven to open the corresponding opening of the storage compartment. And, after placing the cargo in the storage compartment into the cargo handling mechanism, the cargo handling mechanism is controlled to move to a preset height, such that the user may get the cargo from the cargo inversion mechanism.

At S115, after the user confirms receipt of the cargo, the delivery robot confirms the completion of the delivery task indicated by the delivery task data packet.

In some embodiments, as shown in FIG. 10, the present disclosure also provides a robot delivery method, which is applied to the server, and the method includes:

S201, receiving the delivery demand information input by the user, where the delivery demand information includes a target collection mode and/or a target unloading mode; and

S202, generating a delivery task data packet according to the delivery demand information, such that the delivery robot receives the delivery task data packet and performs the delivery task according to the delivery task data packet. The target collection mode may be selected from a plurality of collection modes, and the plurality of collection modes may include a first collection mode in which the delivery robot collects the cargo at the collection point without user participation and a second collection mode in which the user participates in the collection by the delivery robot of cargo at the collection point. The target unloading mode may be selected from a plurality of unloading modes, and the plurality of unloading modes may include a first unloading mode in which the delivery robot unloads the cargo at the unloading point without user participation and a second unloading mode in which the user participates in the delivery robot unloads cargo at the unloading point.

In some embodiments, the method may further include: determining a target delivery robot from the plurality of delivery robots according to the delivery demand information, where the target delivery robot receives the delivery task data packet from the server and performs the delivery task.

In some embodiments, determining the target delivery robot from the plurality of delivery robots according to the delivery demand information may include: determining the delivery priority according to the target collection mode and/or the target unloading mode; and determining the target delivery robot from the plurality of delivery robots according to the delivery priority.

In some embodiments, the delivery priority corresponding to the second collection mode may be higher than the delivery priority of the first collection mode; and the delivery priority of the second unloading mode may be higher than the delivery priority of the first unloading mode.

In some embodiments, one delivery robot may include multiple storage compartments for accommodating cargos, and the volume of any of the storage compartments may be adjustable. The delivery demand information may also include cargo size information. Determining the target delivery robot from the plurality of delivery robots according to the delivery demand information may include: determining the target delivery robot from the plurality of delivery robots according to the cargo size information, where the target delivery robot has one storage compartment matching the cargo size information.

In some embodiments, different storage compartments may be separated by detachable partitions, and the volume of any storage compartment may be adjusted according to the disassembly of the partitions.

In some embodiments, determining the target delivery robot from the plurality of delivery robots according to the delivery demand information, may include: determining the target delivery robot from the plurality of delivery robots according to the delivery demand information and the status information of each delivery robot in the plurality of delivery robots. The delivery demand information may include cargo size information, position information of collection points and/or unloading points. The status information of the delivery robot may include the volume of the vacant storage compartments in the delivery robot, the position information of the delivery robot, or the position information of collection points and/or unloading points of other delivery tasks that the delivery robot needs to perform.

In some embodiments, the method may further include: receiving occupation information of path points from different delivery robots; and coordinating the passage of the two delivery robots when it is determined that the path points that the two delivery robots are about to arrive at are occupied by each other according to at least two occupation information.

In some embodiments, the method may further include: receiving the position information uploaded by each delivery robot in real time during the execution of the delivery task; and coordinating the passage of the two delivery robots when it is determined that the path points that the two delivery robots are about to arrive at are occupied by each other according to the received position information of each delivery robot and the plurality of path points corresponding to each delivery robot.

In some embodiments, coordinating the passage of the two delivery robots may include: determining the passage coordination strategy of the two delivery robots according to the number of delivery robots that may be accommodated in the region corresponding to the occupied path point, to control the passage of the two delivery robots according to the passage coordination strategy.

In some embodiments, the passage coordination strategy may include the driving order of the two delivery robots when driving to the occupied path point and/or the path point where any of the two delivery robots temporarily stops.

In some embodiments, the collection point in the first collection mode may include the smart container collection point or other collection points other than the smart container collection point, and the unloading point in the first unloading mode may include the smart container unloading point or other unloading points other than the smart container unloading point.

In some embodiments, the collection point in the second collection mode may include the mailroom collection point or other collection points other than the mailroom collection point, and the unloading point in the second unloading mode may include the mailroom unloading point or other unloading points other than the mailroom unloading point.

In some embodiments, the method may further include: receiving a prompt message sent by the delivery robot to prompt the user to keep a distance from the delivery robot, or forwarding it to the terminal device to display the prompt message on the terminal device.

In some embodiments, the delivery demand information may include information input by the user and information automatically matched by the information input by the user.

Correspondingly, as shown in FIG. 11, the present disclosure also provides a robot delivery method, which is applied to a delivery robot. The method includes:

At S301, a delivery task data packet is received, where the delivery task packet is generated based on the delivery demand information input by the user and the delivery demand information includes a target collection mode and/or a target unloading mode; and

At S302, the delivery task is performed according to the delivery task data packet. The target collection mode may be selected from a plurality of collection modes, and the plurality of collection modes may include a first collection mode in which the delivery robot collects cargo at the collection point without user participation and a second collection mode in which the user participates in the delivery robot collecting cargo at the collection point. The target unloading mode may be selected from a plurality of unloading modes, and the plurality of unloading modes may include a first unloading mode in which the delivery robot unloads cargo at the unloading point without user participation and a second unloading mode in which the user participates in the delivery robot unloads cargo at the unloading point.

In some embodiments, the delivery task data packet may include position information of a plurality of path points, and the plurality of path points may include a collection point, an unloading point, and a plurality of intermediate path points from the collection point to the unloading point. The method may further include: in the case where it is detected that at least one of the plurality of path points is unreachable, processing is performed according to a temporary processing strategy corresponding to the unreachable path point, where at least some of the path points of different categories have different temporary processing strategies.

In some embodiments, the categories may be divided according to the physical scene of the location of the path point and/or the tasks to be performed when the path point is reached.

In some embodiments, the path points of different categories may include at least one of: an intermediate path point of an elevator category, an intermediate path point of an access control category, an intermediate path point of a gate category, an intermediate path point of a parking lot category, a collection point of a manned cargo collection category, an unloading point of a manned cargo unloading category, or an unloading point of an unmanned cargo unloading category.

In some embodiments, the temporary processing strategies corresponding to different types of path points may include at least one of the following: (1) the temporary processing strategies corresponding to the intermediate path points of the elevator category and the intermediate path points of the access control category include: waiting for the elevator or access control to open in the preset region including the intermediate path point; (2) the temporary processing strategies corresponding to the intermediate path points of the gate category include: waiting for the gate of the gate to open at the spare path point near the gate; (3) the temporary processing strategies corresponding to the intermediate path points of the parking lot category include: passing through the preset passage region including the intermediate path point; and when the preset passage region is occupied, waiting at the original location; (4) the temporary processing strategies corresponding to the collection point of the manned cargo collection category and the unloading point of the manned cargo unloading category include: stopping in the preset region around the collection point or the unloading point to reduce the obstruction of the delivery robot to normal traffic; (5) the temporary processing strategies corresponding to the unloading point of the unmanned cargo unloading category include: placing the cargo at the spare unloading point near the unloading point.

In some embodiments, the method may further include: in the process of executing the delivery task, when it is detected that the path point to be reached is occupied by other delivery robot(s), the occupation information of the path point may be sent to the server, such that the server may coordinate the passage of the two delivery robots when it is determined based on at least two occupation information that the path points to be reached by two delivery robots are occupied by each other.

In some embodiments, the method may further include: in the process of executing the delivery task, reporting its own position information to the server in real time, such that the server may coordinate the passage of the two delivery robots when it is determined based on the received position information of each delivery robot and the multiple path points corresponding to each delivery robot that the path points to be reached by two delivery robots are occupied by each other.

In some embodiments, the collection point in the first collection mode may include a smart container collection point or other collection points other than the smart container collection point, and the unloading point in the first unloading mode may include a smart container unloading point or other unloading points other than the smart container unloading point.

In some embodiments, the collection point in the second collection mode may include a mailroom collection point or other collection points other than the mailroom collection point, and the unloading point in the second unloading mode may include a mailroom unloading point or other unloading points other than the mailroom unloading point.

In some embodiments, the method may be applied to one delivery robot, and the delivery robot may include a plurality of storage compartments for accommodating cargo. Any storage compartment may include two openings and two types of cover members for opening or closing the two openings, respectively. The method may further include: when the collection point in the second collection mode is a mailroom collection point or the unloading point in the second unloading mode is a mailroom unloading point, and the user is verified to have the specified authority, driving one of the two types of cover members with a faster speed for opening or closing.

In some embodiments, the delivery robot may further include a liftable cargo handling mechanism, and the cargo handling mechanism may be used to cooperate with the two types of cover members with the lower speed of opening or/closing the opening. The method may further include: when the collection point in the second collection mode is not the mailroom collection point, the unloading point in the second unloading mode is not the mailroom unloading point, or the user does not have the specified authority, after arriving at the collection point or unloading point, controlling the cargo handling mechanism to move to a preset height, and driving one of the two types of cover members with a lower speed of opening or closing the opening to cooperate with the cargo handling mechanism.

In some embodiments, one of the two types of cover members with a faster speed of opening or closing the opening may be opened by an electric lock mechanism, and another one of the two types of cover members with a lower speed of opening or closing the opening may be opened by a transmission mechanism; and/or, the two openings may be respectively located on different sides of the storage compartment.

In some embodiments, the method may further include: before controlling the liftable cargo handling mechanism to move to the preset height, outputting a prompt message for prompting the user to keep a distance from the delivery robot.

In some embodiments, the delivery demand information may include information input by the user and information automatically matched by the information input by the user.

In some embodiments, the method may further include: when the first unloading of any delivery task fails in the second unloading mode, the delivery task may be performed again in the second unloading mode; when the unloading of the same delivery task fails at least twice in a row in the second unloading mode, the delivery task may be performed in the first unloading mode.

In some embodiments, the method may be applied to one delivery robot, and the delivery robot may be provided with a camera. The method may further include: when the first collection mode is used to collect cargo, after arriving at the collection point, the camera is turned on to record until the cargos are collected; or, when the first unloading mode is used to unload cargo, after arriving at the unloading point, the camera is turned on to record until the cargo are unloaded.

Correspondingly, as shown in FIG. 12, the present disclosure also provides a robot delivery method, which is applied to a terminal device, and the method includes:

S401, receiving the delivery demand information input by the user, where the delivery demand information includes a target collection mode and/or a target unloading mode; and

S402, sending the delivery demand information to the server, such that the server generates the delivery task data packet according to the delivery demand information and the delivery robot receives the delivery task data packet to perform the delivery task according to the delivery task data packet. The target collection mode may be selected from a plurality of collection modes, and the plurality of collection modes may include a first collection mode in which the delivery robot collects cargo at the collection point without user participation and a second collection mode in which the user participates in the delivery robot collecting cargo at the collection point. The target unloading mode may be selected from a plurality of unloading modes, and the plurality of unloading modes may include a first unloading mode in which the delivery robot unloads cargo at the unloading point without user participation and a second unloading mode in which the user participates in the delivery robot unloads cargo at the unloading point.

In some embodiments, the method may further include: receiving the prompt message forwarded by the delivery robot through the server to prompt the user to keep a distance from the delivery robot, and displaying the prompt message.

In some embodiments, the delivery demand information may include information input by the user and information automatically matched by the information input by the user.

In some embodiments, the method may be applied to the terminal device, and the terminal device may display a chat interface, where the chat interface includes a cargo delivery control. The method may also include: in response to the user's operation on the cargo delivery control, showing a delivery demand information filling page, and automatically filling in the user information of the chat object corresponding to the chat interface in the delivery demand information filling page.

Correspondingly, as shown in FIG. 13, the present disclosure also provides a robot delivery method, which is applied to a delivery robot, including:

S501, receiving the delivery task data packet issued by the server, where the delivery task data packet includes position information of multiple path points, and the multiple path points include a collection point, an unloading point, and multiple intermediate path points from the collection point to the unloading point; and

S502, in the process of executing the delivery task according to the delivery task data packet, when it is detected that at least one of the multiple path points is unreachable, processing the unreachable path point according to the temporary processing strategy corresponding to the unreachable path point, where at least some of the different categories of path points have different corresponding temporary processing strategies.

In this embodiment, when the path point is unreachable, the delivery robot may process it according to the temporary processing strategy corresponding to the unreachable path point, which is conducive to improving the processing efficiency and success rate of the delivery task and avoiding stagnation or failure of the delivery task.

In some embodiments, the categories may be divided according to the physical scene of the location of the path point and/or the tasks to be performed when reaching the path point.

In some embodiments, the different categories of path points may include at least one of the following: intermediate path points of elevator category, intermediate path points of access control category, intermediate path points of gate category, intermediate path points of parking lot category, collection points of manned cargo collection category, unloading points of manned unloading category, and unloading points of unmanned unloading category.

In some embodiments, the temporary processing strategies corresponding to different categories of path points may include at least one of the following: (1) the temporary processing strategies corresponding to the intermediate path points of the elevator category and the intermediate path points of the access control category including: waiting for the elevator or access control to open in a preset region including the intermediate path points; (2) the temporary processing strategies corresponding to the intermediate path points of the gate category including: waiting for the gate of the gate to open at a spare path point close to the gate; (3) the temporary processing strategies corresponding to the intermediate path points of the parking lot category including: passing through a preset passage region including the intermediate path point; and if the preset passage region is occupied, waiting in place; (4) the temporary processing strategies corresponding to the collection points of the manned cargo collection category and the unloading points of the manned cargo unloading category including: stopping in a preset region around the collection point or the unloading point to reduce the obstruction of the delivery robot to normal traffic; (5) The temporary processing strategies corresponding to the unloading points of the unmanned cargo unloading category including: placing the cargos at a spare unloading point near the unloading point.

Correspondingly, as shown in FIG. 14, the present disclosure also provides a server, including a memory 11 for storing executable instructions; and one or more processors 12. When the one or more processors execute the executable instructions, they may be individually or collectively configured to execute any one of the methods provided by the embodiments of the present disclosure shown in FIG. 10.

The one or more processors 12 may execute the executable instructions included in the memory 11. The one or more processors 12 may include a central processing unit (CPU), or other general-purpose processors, digital signal processors (DSP), application-specific integrated circuits (ASIC), field-programmable gate arrays (FPGA) or other programmable logic devices, discrete gates or transistor logic devices, discrete hardware components, etc. The general-purpose processors may include a microprocessor or any conventional processor, etc.

The memory 11 may be configured to store the executable instructions of the robot delivery method, and the memory 11 may include at least one type of storage medium, including flash memory, hard disk, multimedia card, card-type memory (e.g., SD or DX memory, etc.), random access memory (RAM), static random access memory (SRAM), read-only memory (ROM), electrically erasable programmable read-only memory (EEPROM), programmable read-only memory (PROM), magnetic memory, disk, optical disk, etc. Moreover, the device may cooperate with a network storage device that performs the storage function of the memory through a network connection. The memory 11 may be an internal storage unit of the server 10, such as a hard disk or memory of the server 10. The memory 11 may also be an external storage device of the server 10, such as a plug-in hard disk equipped on the server 10, a smart media card (SMC), a secure digital (Secure Digital, SD) card, a flash card, etc. Further, the memory 11 may also include both an internal storage unit of the server 10 and an external storage device. The memory 11 may be used to store the computer program 55 and other programs and data required by the device. The memory 11 may also be used to temporarily store data that has been output or is about to be output.

For the details of the implementation process of the functions and effects of each unit in the above-mentioned device, references may be made to the implementation process of the corresponding steps in the method embodiments, which will not be repeated here.

Accordingly, the present disclosure also provides a delivery robot, including:
a memory for storing executable instructions;
one or more processors;
a travel mechanism and multiple storage compartments.

When the one or more processors execute the executable instructions, they may be individually or collectively configured to execute any of the methods provided by the embodiments of the present disclosure shown in FIG. 11 to FIG. 13.

Accordingly, the present disclosure also provides a terminal device, including: a memory for storing executable instructions; and one or more processors.

When the one or more processors execute the executable instructions, they may be individually or collectively configured to execute any of the methods provided by the embodiments of the present disclosure shown in FIG. 12.

One embodiment of the present disclosure also provides a non-transitory computer-readable storage medium including instructions, such as a memory including instructions. The instructions may be executed by a processor of a device to execute any method provided by the embodiments of the present disclosure. For example, the non-transitory computer-readable storage medium may be a ROM, a random access memory (RAM), a CD-ROM, a magnetic tape, a floppy disk, or an optical data storage device, etc.

The present disclosure also provides a non-transitory computer-readable storage medium. When the instructions in the storage medium are executed by a processor of a terminal, the terminal may be enabled to execute any method provided by the embodiments of the present disclosure.

Accordingly, one embodiment of the present disclosure also provides a computer program product including a computer program. The computer program may be used to implement any method provided by the embodiments of the present disclosure when executed by a processor.

Various embodiments described herein may be implemented using computer readable media such as computer software, hardware or any combination thereof. For hardware implementation, the embodiments described herein may be implemented using at least one of application-specific integrated circuits (ASIC), digital signal processors (DSP), digital signal processing devices (DSPD), programmable logic devices (PLD), field programmable gate arrays (FPGA), processors, controllers, microcontrollers, microprocessors, or electronic units designed to perform the functions described herein. For software implementation, embodiments such as processes or functions may be implemented with separate software modules that allow the execution of at least one function or operation. Software code may be implemented by software applications (or programs) written in any appropriate programming language, and software code may be stored in a memory and executed by a controller.

It should be noted that, in the present disclosure, relational terms such as first and second, etc., are only used to distinguish one entity or operation from another entity or operation, and do not necessarily require or imply that there is any such actual relationship or order between these entities or operations. The terms "including," "comprising," or any other variation thereof are intended to encompass non-exclusive inclusion, such that a process, method, article, or apparatus that includes a list of elements includes not only those elements, but also other elements not explicitly listed, or elements inherent to such process, method, article, or apparatus. In the absence of further limitations, an element associated with the phrase "including a ..." does not exclude the presence of additional identical elements in the process, method, article, or apparatus that includes the element.

The methods and devices provided in the embodiments of the disclosure have been described in detail above. Specific examples are used herein to explain the principles and implementation methods of the disclosure. The descriptions of the above embodiments are intended solely to aid in understanding the methods and core concepts of the disclosure. Further, for those skilled in the art, variations in specific implementations and application scopes may arise based on the ideas of the disclosure. Therefore, the content of this specification should not be construed as limiting the disclosure.

## Claims

1. A robot delivery system comprising a terminal device, a server, and a delivery robot, wherein:
the terminal device is used to determine delivery demand information, wherein the delivery demand information includes a target collection mode and/or a target unloading mode input by a user;
the server is used to receive the delivery demand information from the terminal device and generate a delivery task data packet according to the delivery demand information; and
the delivery robot is used to receive the delivery task data packet from the server, and perform the delivery task according to the delivery task data packet;
wherein:
the target collection mode is selected from a plurality of collection modes;
the plurality of collection modes include a first collection mode in which the delivery robot collect cargos at a collection point without the user's participation and a second collection mode in which the user participates in the collection by the delivery robot of the cargos at the collection point;
the target unloading mode is selected from a plurality of unloading modes; and
the plurality of unloading modes include a first unloading mode in which the delivery robot unloads the cargos at an unloading point without the user's participation and a second unloading mode in which the user participates in the unloading by the delivery robot of the cargos at the unloading point.

2. The system according to claim 1, wherein:
the robot delivery system includes a plurality of delivery robots; and
the server is further used to determine a target delivery robot from the plurality of delivery robots according to the delivery demand information, wherein the target delivery robot receives the delivery task data packet from the server and performs the delivery task.

3. The system according to claim 2, wherein:
when determining the target delivery robot, the server is used to determine the delivery priority according to the target collection mode and/or the target unloading mode; and determine the target delivery robot from the plurality of delivery robots according to the delivery priority.

4. The system according to claim 3, wherein:
the delivery priority of the second collection mode is higher than the delivery priority of the first collection mode;
the delivery priority of the second unloading mode is higher than the delivery priority of the first unloading mode.

5. The system according to claim 2, wherein:
one delivery robot includes multiple storage compartments for accommodating cargos, and the volume of any of the storage compartments is adjustable;
the delivery demand information also includes cargo size information; and
when determining the target delivery robot, the server is used to determine the target delivery robot from the plurality of delivery robots based on the cargo size information, wherein the target delivery robot has one storage compartment that matches the cargo size information.

6. The system according to claim 5, wherein different storage compartments are separated by removable partitions, and the volume of any storage compartment is able to be adjusted according to the removal of the partitions.

7. The system according to claim 2, wherein:
when determining the target delivery robot, the server is used to determine the target delivery robot from the plurality of delivery robots based on the delivery demand information and the status information of each delivery robot of the plurality of delivery robots, wherein:
the delivery demand information includes cargo size information, position information of the collection point and/or the unloading point; and
the status information of the delivery robot includes the volume of vacant storage compartments in the delivery robot, the position information of the delivery robot, the position information of a collection point and/or an unloading point of another delivery task that the delivery robot needs to perform.

8. The system according to claim 1, wherein:
the delivery task data packet includes position information of multiple path points, and the multiple path points include a collection point, an unloading point, and multiple intermediate path points between the collection point and the unloading point; and
the delivery robot is further used to process the path points according to temporary processing strategies corresponding to unreachable path points when it is detected that at least one of the multiple path points is unreachable, wherein the temporary processing strategies corresponding to at least some of different categories of path points are different.

9. The system according to claim 8, wherein the categories of path points are divided according to the physical scenes where the path points are located and/or the tasks to be performed when reaching the path points.

10. The system according to claim 8 or 9, wherein different categories of path points include at least one of: intermediate path points of the elevator category, intermediate path points of the access control category, intermediate path points of the gate category, intermediate path points of the parking lot category, collection points of the manned pick-up category, unloading points of the manned unloading category, or unloading points of the unmanned unloading category.

11. The system according to claim 1, wherein:
the robot delivery system includes a plurality of delivery robots;
any of the plurality of delivery robots is further used to: when it detects that a path point to be reached is occupied by another delivery robot during the execution of the delivery task, send occupancy information of the path point to the server; and
the server is further used to receive occupancy information of path points from different delivery robots; and, when it is determined that path points to be reached by two delivery robots are occupied by each other, respectively, based on at least two pieces of occupancy information, coordinate the passage of the two delivery robots.

12. The system according to claim 1, wherein:
the robot delivery system includes a plurality of delivery robots;
any of the plurality of delivery robots is further used to report its own position information to the server in real time during the execution of the delivery task; and
the server is further used to: when it is determined that path points to be reached by two delivery robots are occupied by each other, respectively, based on the received position information of each delivery robot and multiple path points corresponding to each delivery robot, coordinate the passage of the two delivery robots.

13. The system according to claim 11 or 12, wherein when coordinating the passage of the two delivery robots, the server is used to determine the passage coordination strategy of the two delivery robots according to the number of delivery robots that are able to be accommodated in a region corresponding to an occupied path point, to control the passage of the two delivery robots according to the passage coordination strategy.

14. The system according to claim 13, wherein the passage coordination strategy includes the driving order of the two delivery robots when driving to the occupied path point and/or path points where any one of the two delivery robots temporarily stops.

15. The system according to any one of claims 1 to 14, wherein the collection point in the first collection mode includes a smart container collection point or other collection points other than the smart container collection point, and the unloading point in the first unloading mode includes a smart container unloading point or other unloading points other than the smart container unloading point.

16. The system according to any one of claims 1 to 15, wherein the collection point in the second collection mode includes a mailroom collection point or other collection points other than the mailroom collection point, and the unloading point in the second unloading mode includes the mailroom unloading point or other unloading points other than the mailroom unloading point.

17. The system according to claim 16, wherein:
one delivery robot includes a plurality of storage compartments for accommodating cargos, wherein each storage compartment includes two openings and two types of cover members respectively used to open or close the two openings; and
the delivery robot is further used to drive one of the two types of cover members with a faster speed of opening or closing the openings when the collection point in the second collection mode is the mailroom collection point or the unloading point in the second unloading mode is the mailroom unloading point and it is verified that the user has the specified authority.

18. The system according to claim 17, wherein:
the delivery robot further includes a liftable cargo handling mechanism, which is used to cooperate with the one of the two types of cover members with a slower speed of opening or closing the openings; and
the delivery robot is further used to control the cargo handling mechanism to move to a preset height after arriving at the collection point or the unloading point, and drive the one of the two types of cover members with a slower speed of opening or closing the openings to cooperate with the cargo handling mechanism when the collection point in the second collection mode is not the mailroom collection point, the unloading point in the second unloading mode is not the mailroom unloading point, or the user does not have the specified authority.

19. The system according to claim 17 or 18, wherein one of the two types of cover members with a faster speed of opening or closing the openings is opened by an electric lock mechanism, and another one of the two types of cover members with a slower speed of opening or closing the openings is opened by a transmission mechanism; and/or the two openings are located on different sides of the storage compartment.

20. The system according to claim 18, wherein the delivery robot is further used to output a prompt message for prompting the user to keep a distance from the delivery robot before controlling the liftable cargo handling mechanism to move to the preset height.

21. The system according to claim 20, wherein:
the delivery robot includes a display screen, and the delivery robot is used to display the prompt message for prompting the user to keep a distance from the delivery robot through the display screen; or
the delivery robot is used to send the prompt message to one corresponding terminal device through the server, to display the prompt message for prompting the user to keep a distance from the delivery robot on the corresponding terminal device.

22. The system according to any one of claims 1 to 21, wherein the delivery demand information includes information input by the user and information automatically matched from the information input by the user.

23. The system according to claim 22, wherein:
the terminal device displays a chat interface, which includes a cargo delivery control; and
the terminal device is also used to pop up a delivery demand information filling page in response to the user's operation on the cargo delivery control, and automatically fill in the user information of the chat object corresponding to the chat interface in the delivery demand information filling page.

24. The system according to any one of claims 1 to 23, wherein:
the delivery robot is also used to execute the delivery task again according to the second unloading mode when the first unloading of any delivery task fails in the second unloading mode; and to execute the delivery task according to the first unloading mode when the unloading of the same delivery task fails at least twice in a row in the second unloading mode.

25. The system according to any one of claims 1 to 24, wherein:
the delivery robot is provided with a camera; and
the delivery robot is further configured to, when picking up cargos in the first collection mode, turn on the camera to record video after arriving at the collection point until the cargos are collected; or, when unloading cargos in the first unloading mode, turn on the camera to record video after arriving at the unloading point until the cargos are unloaded.

26. A robot delivery method comprising:
receiving delivery demand information input by a user, wherein the delivery demand information includes a target collection mode and/or a target unloading mode; and
generating a delivery task data packet according to the delivery demand information, such that a delivery robot receives the delivery task data packet and performs the delivery task according to the delivery task data packet;
wherein:
the target collection mode is selected from a plurality of collection modes;
the plurality of collection modes include a first collection mode in which the delivery robot collects cargos at a collection point without the user's participation and a second collection mode in which the user participates in the collection by the delivery robot of the cargos at the collection point;
the target unloading mode is selected from a plurality of unloading modes; and
the plurality of unloading modes include a first unloading mode in which the delivery robot unloads the cargos at the unloading point without the user's participation and a second unloading mode in which the user participates in the unloading by the delivery robot of the cargos at the unloading point.

27. The method according to claim 26,
wherein the method is applied to a server; and
the method further comprising:
determining a target delivery robot from a plurality of delivery robots according to the delivery demand information, wherein the target delivery robot receives the delivery task data packet from the server and performs the delivery task.

28. The method according to claim 27, wherein determining the target delivery robot from the plurality of delivery robots according to the delivery demand information includes:
determining a delivery priority according to the target collection mode and/or the target unloading mode and determining the target delivery robot from the plurality of delivery robots according to the delivery priority.

29. The method according to claim 28, wherein:
the delivery priority of the second collection mode is higher than the delivery priority of the first collection mode;
the delivery priority of the second unloading mode is higher than the delivery priority of the first unloading mode.

30. The method according to claim 27, wherein:
one delivery robot includes multiple storage compartments for accommodating cargos, wherein the volume of any of the storage compartments is adjustable;
the delivery demand information also includes cargo size information; and
determining the target delivery robot from the plurality of delivery robots according to the delivery demand information includes determining the target delivery robot from the plurality of delivery robots based on the cargo size information, wherein the target delivery robot has one storage compartment that matches the cargo size information.

31. The method according to claim 30, wherein different storage compartments are separated by removable partitions, and the volume of any storage compartment is able to be adjusted according to the removal of the partitions.

32. The method according to claim 27, wherein:
determining the target delivery robot from the plurality of delivery robots according to the delivery demand information includes determining the target delivery robot from the plurality of delivery robots based on the delivery demand information and the status information of each delivery robot of the plurality of delivery robots,
wherein:
the delivery demand information includes cargo size information, position information of the collection point and/or the unloading point; and
the status information of the delivery robot includes the volume of vacant storage compartments in the delivery robot, the position information of the delivery robot, or the position information of the collection point and/or the unloading point of other delivery tasks that the delivery robot needs to perform.

33. The method according to claim 26, further comprising:
receiving occupancy information of path points from different delivery robots; and
when it is determined based on at least two pieces of occupancy information that path points to be reached by two delivery robots are occupied by each other, respectively, coordinating the passage of the two delivery robots.

34. The method according to claim 26, further comprising:
receiving position information reported by each delivery robot in real time during the execution of the delivery task; and
when it is determined that path points to be reached by two delivery robots are occupied by each other, respectively, based on the received position information of each delivery robot and multiple path points corresponding to each delivery robot, coordinating the passage of the two delivery robots.

35. The method according to claim 33 or 34, wherein coordinating the passage of the two delivery robots includes:
determining the passage coordination strategy of the two delivery robots according to the number of delivery robots that are able to be accommodated in a region corresponding to the occupied path point, to control the passage of the two delivery robots according to the passage coordination strategy.

36. The method according to claim 35, wherein the passage coordination strategy includes the driving order of the two delivery robots when driving to the occupied path point and/or path points where any one of the two delivery robots temporarily stops.

37. The method according to any one of claims 26 to 36, wherein the collection point in the first collection mode includes a smart container collection point or other collection points other than the smart container collection point, and the unloading point in the first unloading mode includes a smart container unloading point or other unloading points other than the smart container unloading point.

38. The method according to any one of claims 26 to 37, wherein the collection point in the second collection mode includes a mailroom collection point or other collection points other than the mailroom collection point, and the unloading point in the second unloading mode includes the mailroom unloading point or other unloading points other than the mailroom unloading point.

39. The method according to any one of claims 26 to 38, further comprising:
receiving from the delivery robot a prompt message for prompting the user to keep a distance from the delivery robot, and forwarding the prompt message to a terminal device, such that the terminal device displays the prompt message.

40. The method according to any one of claims 26 to 39, wherein the delivery demand information includes information input by the user and information automatically matched from the information input by the user.

41. A robot delivery method comprising:
receiving a delivery task data packet, wherein the delivery task data packet is generated according to delivery demand information input by a user and the delivery demand information includes a target collection mode and/or a target unloading mode; and
performing a corresponding delivery task according to the delivery task data packet;
wherein:
the target collection mode is selected from a plurality of collection modes;
the plurality of collection modes include a first collection mode in which the delivery robot collect cargos at a collection point without the user's participation and a second collection mode in which the user participates in the collection by the delivery robot of the cargos at the collection point;
the target unloading mode is selected from a plurality of unloading modes; and
the plurality of unloading modes include a first unloading mode in which the delivery robot unloads the cargos at the unloading point without the user's participation and a second unloading mode in which the user participates in the unloading by the delivery robot of the cargos at the unloading point.

42. The method according to claim 41,
wherein the delivery task data packet includes position information of multiple path points, and the multiple path points include a collection point, an unloading point, and multiple intermediate path points between the collection point and the unloading point; and
the method further comprising:
processing the path points according to temporary processing strategies corresponding to unreachable path points when it is detected that at least one of the multiple path points is unreachable, wherein the temporary processing strategies corresponding to at least some of different categories of path points are different.

43. The method according to claim 42, wherein the categories are divided according to the physical scenes where the path points are located and/or the tasks to be performed when reaching the path points.

44. The method according to claim 42 or 43, wherein different categories of path points include at least one of: intermediate path points of the elevator category, intermediate path points of the access control category, intermediate path points of the gate category, intermediate path points of the parking lot category, pick-up points of the manned pick-up category, unloading points of the manned unloading category, or unloading points of the unmanned unloading category.

45. The method according to claim 44, wherein the temporary processing strategies corresponding to different categories of path points include at least one of:
a temporary processing strategy corresponding to the intermediate path points of the elevator category or the access control category, including: waiting for the elevator or access control to open in a preset region including the intermediate path points;
a temporary processing strategy corresponding to the intermediate path points of the gate category, including: waiting for the gate to open at a spare path point close to the gate;
a temporary processing strategy corresponding to the intermediate path points of the parking lot category, including: passing through a preset passage region including the intermediate path point; and, when the preset passage region is occupied, waiting in place;
a temporary processing strategy corresponding to the collection points of the manned cargo collection category and the unloading points of the manned unloading category, including: stopping in a preset region around the collection point or unloading point to reduce the obstruction of normal traffic by the delivery robot; or
a temporary processing strategy corresponding to the unloading points of the unmanned cargo unloading category, including: placing the cargos at a spare unloading point near the unloading point.

46. The method according to claim 41, further comprising:
when it detects that a path point to be reached is occupied by another delivery robot during the execution of the delivery task, sending occupancy information of the path point to the server, such that, when it is determined based on at least two pieces of occupancy information that path points to be reached by two delivery robots are occupied by each other, respectively, the server coordinates the passage of the two delivery robots.

47. The method according to claim 41, further comprising:
reporting own position information to the server in real time during the execution of a delivery task, such that, when it is determined that path points to be reached by two delivery robots are occupied by each other, respectively, based on the received position information of each delivery robot and multiple path points corresponding to each delivery robot, the server coordinates the passage of the two delivery robots.

48. The method according to any one of claims 41 to 47, wherein the collection point in the first collection mode includes a smart container collection point or other collection points other than the smart container collection point, and the unloading point in the first unloading mode includes a smart container unloading point or other unloading points other than the smart container unloading point.

49. The method according to any one of claims 41 to 48, wherein the collection point in the second collection mode includes a mailroom collection point or other collection points other than the mailroom collection point, and the unloading point in the second unloading mode includes the mailroom unloading point or other unloading points other than the mailroom unloading point.

50. The method according to claim 49,:
wherein the delivery robot includes a plurality of storage compartments for accommodating cargos, wherein each storage compartment includes two openings and two types of cover members respectively used to open or close the two openings;
the method further comprising:
driving one of the two types of cover members which is able to open or close the openings faster when the collection point in the second collection mode is the mailroom collection point or the unloading point in the second unloading mode is the mailroom unloading point and it is verified that the user has the specified authority.

51. The method according to claim 50,
wherein the delivery robot further includes a liftable cargo handling mechanism, which is used to cooperate with the one of the two types of cover members with a slower speed of opening or closing the openings;
the method further comprising:
controlling the cargo handling mechanism to move to a preset height after arriving at the collection point or the unloading point, and driving the one of the two types of cover members with a slower speed of opening or closing the openings to cooperate with the cargo handling mechanism when the collection point in the second collection mode is not the mailroom collection point, the unloading point in the second unloading mode is not the mailroom unloading point, or the user does not have the specified authority.

52. The method according to claim 50 or 51, wherein one of the two types of cover members with a faster speed of opening or closing the openings is opened by an electric lock mechanism, and one of the two types of cover members with a slower speed of opening or closing the openings is opened by a transmission mechanism; and/or the two openings are located on different sides of the storage compartment.

53. The method according to claim 51, further comprising:
outputting a prompt message for prompting the user to keep a distance from the delivery robot before controlling the liftable cargo handling mechanism to move to the preset height.

54. The method according to any one of claims 41 to 53, wherein the delivery demand information includes information input by the user and information automatically matched from the information input by the user.

55. The method according to any one of claims 41 to 54, further comprising:
performing the delivery task again according to the second unloading mode when the first unloading of any delivery task fails in the second unloading mode; and performing the delivery task according to the first unloading mode when the unloading of the same delivery task fails at least twice in a row in the second unloading mode.

56. The method according to any one of claims 41 to 55,:
wherein the method is applied to the delivery robot, the delivery robot is provided with a camera;
the method further comprising:
when picking up cargos in the first collection mode, turning on the camera to record video after arriving at the collection point until the cargos are collected; or, when unloading cargos in the first unloading mode, turning on the camera to record video after arriving at the unloading point until the cargos are unloaded.

57. A robot delivery method comprising:
receiving delivery demand information input by a user, wherein the delivery demand information includes a target collection mode and/or a target unloading mode; and
sending the delivery demand information to a server, such that the server generates a delivery task data packet according to the delivery demand information to cause a delivery robot to receive the delivery task data packet from the server and perform the delivery task according to the delivery task data packet;
wherein:
the target collection mode is selected from a plurality of collection modes;
the plurality of collection modes include a first collection mode in which the delivery robot collects cargos at a collection point without the user's participation and a second collection mode in which the user participates in the collection by the delivery robot of the cargos at the collection point;
the target unloading mode is selected from a plurality of unloading modes; and
the plurality of unloading modes include a first unloading mode in which the delivery robot unloads the cargos at the unloading point without the user's participation and a second unloading mode in which the user participates in the unloading by the delivery robot of the cargos at the unloading point.

58. The method according to claim 57, further comprising:
receiving a prompt message forwarded by the delivery robot through the server to remind the user to keep a distance from the delivery robot, and displaying the prompt message.

59. The method according to claim 57, wherein the delivery demand information includes information input by the user and information automatically matched from the information input by the user.

60. The method according to claim 59,:
wherein the method is applied to a terminal device, the terminal device displays a chat interface, which includes a cargo delivery control;
the method further comprising:
popping up a delivery demand information filling page in response to the user's operation on the cargo delivery control, and automatically filling in the user information of the chat object corresponding to the chat interface in the delivery demand information filling page.

61. A robot delivery method comprising:
receiving a delivery task packet issued by a server, wherein: the delivery task data packet includes position information of multiple path points, and the multiple path points include a collection point, an unloading point, and multiple intermediate path points between the collection point and the unloading point; and
processing the path points according to temporary processing strategies corresponding to unreachable path points when it is detected that at least one of the multiple path points is unreachable, wherein the temporary processing strategies corresponding to at least some different categories of path points are different.

62. The method according to claim 61, wherein the categories are divided according to the physical scenes where the path points are located and/or the tasks to be performed when reaching the path points.

63. The method according to claim 62, wherein different categories of path points include at least one of: intermediate path points of the elevator category, intermediate path points of the access control category, intermediate path points of the gate category, intermediate path points of the parking lot category, pick-up points of the manned pick-up category, unloading points of the manned unloading category, or unloading points of the unmanned unloading category.

64. The method according to claim 63, wherein the temporary processing strategies corresponding to different categories of path points include at least one of:
a temporary processing strategy corresponding to the intermediate path points of the elevator category, including: waiting for the elevator or access control to open in a preset region including the intermediate path points;
a temporary processing strategy corresponding to the intermediate path points of the gate category, including: waiting for the gate to open at a spare path point close to the gate;
a temporary processing strategy corresponding to the intermediate path points of the parking lot category, including: passing through a preset passage region including the intermediate path point; and, when the preset passage region is occupied, waiting in place;
a temporary processing strategy corresponding to the collection points of the manned cargo collection category and the unloading points of the manned unloading category, including: stopping in a preset region around the collection point or unloading point to reduce the obstruction of normal traffic by the delivery robot; or
a temporary processing strategy corresponding to the unloading points of the unmanned cargo unloading category, including: placing the cargos at a spare unloading point near the unloading point.

65. A server comprising:
a memory configured to store executable instructions; and
one or more processors;
wherein, when the one or more processors execute the executable instructions, the one or more processors are independently or collectively configured to implement a method according to any one of claims 26 to 40.

66. A delivery robot comprising:
a memory configured to store executable instructions;
one or more processors;
a travel mechanism; and
a plurality of storage compartments;
wherein, when the one or more processors execute the executable instructions, the one or more processors are independently or collectively configured to implement a method according to any one of claims 41 to 56 and claims 61 to 64.

67. A terminal device comprising:
a memory configured to store executable instructions; and
one or more processors;
wherein, when the one or more processors execute the executable instructions, the one or more processors are independently or collectively configured to implement a method according to any one of claims 57 to 60.

68. A computer-readable storage medium storing executable instructions, the executable instructions, when executed by a processor, implementing a method according to any one of claims 26 to 64.
